# EUROPEAN PATENT APPLICATION

(11) **EP 4 818 867 A1**
(43) Date of publication of application: **07.10.2026**
(21) Application number: 24900856.6
(22) Date of filing: 30.10.2024
(51) Int. Cl.: G06F 3/0484, G06F 11/34, H04M 1/72469, G06F 3/04817, G06F 3/04842, G06F 3/04845, G06F 9/451, G06F 3/0486

(54) **ELECTRONIC DEVICE AND METHOD FOR EDITING HOME SCREEN IN ELECTRONIC DEVICE**

(30) Priority: 07.12.2023 KR 20230176180; 13.02.2024 KR 20240020426
(71) Applicant: Samsung Electronics Co., Ltd., Suwon-si, Gyeonggi-do 16677 (KR)
(72) Inventor: CHUNG, Jinkyo, Suwon-si Gyeonggi-do 16677 (KR); KIM, Hyun, Suwon-si Gyeonggi-do 16677 (KR); SEO, Seunghyun, Suwon-si Gyeonggi-do 16677 (KR); YANG, Guhyun, Suwon-si Gyeonggi-do 16677 (KR); CHANG, Ilku, Suwon-si Gyeonggi-do 16677 (KR)
(74) Representative: Gulde & Partner
(86) International application number: PCT/KR2024/016747
(87) International publication number: WO 2025/121669

(57) **Abstract**

An electronic device, according to one embodiment, may comprise: a display; at least one processor; and a memory that stores instructions. The instructions, according to one embodiment, when executed by the processor, may instruct a wearable electronic device to: display a plurality of first cells via the display when entering a first grid mode from among a plurality of editing modes of a home screen, wherein each of the first cells has a first size; display a first object in a first area including a first number of first cells from among the plurality of first cells; and move the first object in units of the first cells. The instructions, according to one embodiment, when executed by the processor, may instruct the wearable electronic device to set a plurality of second cells when entering a second grid mode from among the plurality of editing modes of the home screen, wherein each of the second cells has a second size different from the first size; display the first object in a second area including a second number of second cells from among the plurality of second cells; and move the first object in units of the second cells. The first size may be greater than the second size. Other embodiments may be included.

## Description

### [Technical Field]

The disclosure relates to an electronic device and a method for editing a home screen in the electronic device.

### [Background Art]

Electronic devices provide a widget service that can quickly provide various contents, such as securities, weather, clock, and news, to a home screen of the electronic device. Each of the widgets is a graphic interface that supports interaction with a user and an application more smoothly, and allows the user to directly receive desired contents on the home screen of an electronic device without executing an application for executing the contents.

The electronic device may place various widgets corresponding to various contents on the home screen, based on a user's selection, and may provide associated contents, based on selection of a widget placed on the home screen.

### [Detailed Description of the Invention]

### [Technical Solution]

An electronic device may provide a first home screen editing mode in which a plurality of widgets can be neatly arranged on a home screen, and a second home screen editing mode in which a plurality of widgets can be freely arranged on the home screen.

An electronic device according to an embodiment may include a display, at least one processor, and memory configured to store instructions. According to an embodiment, the instructions, when executed by the processor, may cause the wearable electronic device to, upon entering a first grid mode among a plurality of home screen edit modes, display a plurality of first cells on the display, each of the first cells having a first size, display a first object in a first area including a first number of first cells among the plurality of first cells, and control the first object to be moved in units of the first cells. According to an embodiment, the instructions, when executed by the processor, may cause the wearable electronic device to, when entering a second grid mode among the plurality of home screen edit modes, configure a plurality of second cells, each of the second cells having a second size different from the first size, display the first object in a second area including a second number of second cells among the plurality of second cells, and control the first object to be moved in units of the second cells. The first size may be larger than the second size.

A method for editing a home screen in an electronic device, according to an embodiment, may include, upon entering a first grid mode among a plurality of home screen edit modes, displaying a plurality of first cells on a display, the first cells each having a first size, displaying a first object in a first area including a first number of first cells among the plurality of first cells, and controlling the first object to be moved in units of the first cells. The method according to an embodiment may include, upon entering a second grid mode among the plurality of home screen edit modes, configuring a plurality of second cells, each of the second cells having a second size different from the first size, displaying the first object in a second area including a second number of second cells among the plurality of second cells, and controlling the first object to be moved in units of the second cells. In the method according to an embodiment, the first size may be larger than the second size.

According to an embodiment, in a non-volatile storage medium storing instructions, the instructions may be configured to, when executed by an electronic device, cause the electronic device to perform at least one operation, and the at least one operation may include, upon entering a first grid mode among a plurality of home screen edit modes, displaying a plurality of first cells on a display, wherein each of the first cells has a first size. According to an embodiment, the at least one operation may include displaying a first object in a first area including a first number of first cells among the plurality of first cells, and controlling the first object to be moved in units of the first cells. According to an embodiment, the at least one operation may include, upon entering a second grid mode among the plurality of home screen edit modes, configuring a plurality of second cells, wherein each of the second cells has a second size different from the first size. According to an embodiment, the at least one operation may include displaying the first object in a second area including a second number of second cells among the plurality of second cells, and controlling the first object to be moved in units of the second cells. According to an embodiment, in the at least one operation, the first size may be larger than the second size.

### [Brief Description of Drawings]

FIG. 1 is a block diagram illustrating an electronic device in a network environment according to an embodiment.
FIG. 2 is a block diagram of an electronic device according to an embodiment.
FIGS. 3A and 3B are diagrams illustrating a home screen edit mode in an electronic device according to an embodiment.
FIGS. 4A and 4B are diagrams illustrating an object displayed in a home screen edit mode in an electronic device according to an embodiment.
FIGS. 5A and 5B are diagrams illustrating an object displayed in a home screen edit mode in an electronic device according to an embodiment.
FIGS. 6A and 6B are diagrams illustrating a layout of an object displayed in a home screen edit mode in an electronic device according to an embodiment.
FIG. 7 is a diagram for illustrating a change of a grid mode in a home screen edit mode in an electronic device according to an embodiment.
FIGS. 8A, 8B, and 8C are diagrams illustrating a change of a grid mode in a home screen edit mode in an electronic device according to an embodiment.
FIGS. 9A, 9B, and 9C are diagrams illustrating display of a guide line for arranging an object in a home screen edit mode in an electronic device according to an embodiment.
FIGS. 10A, 10B, and 10C are diagrams illustrating display of a guide line for arranging an object in a home screen edit mode in an electronic device according to an embodiment.
FIGS. 11A and 11B are diagrams illustrating display of a decorative object in a home screen edit mode in an electronic device according to an embodiment.
FIGS. 12A, 12B, 12C, 12D, and 12E are diagrams illustrating display of a decorative object in a home screen edit mode in an electronic device according to an embodiment.
FIGS. 13A, 13B, 13C, and 13D are diagrams illustrating display of a decorative object in a home screen edit mode in an electronic device according to an embodiment.
FIGS. 14A, 14B, and 14C are diagrams illustrating display of a decorative object in a home screen edit mode in an electronic device according to an embodiment.
FIG. 15 is a flowchart illustrating operations for providing a grid mode for editing a home screen in an electronic device according to an embodiment.
FIG. 16 is a flowchart illustrating operations for providing a grid mode for editing a home screen in an electronic device according to an embodiment.
FIGS. 17A and 17B are flowcharts illustrating operations for providing a grid mode for editing a home screen in an electronic device according to an embodiment.

### [Mode for Carrying out the Invention]

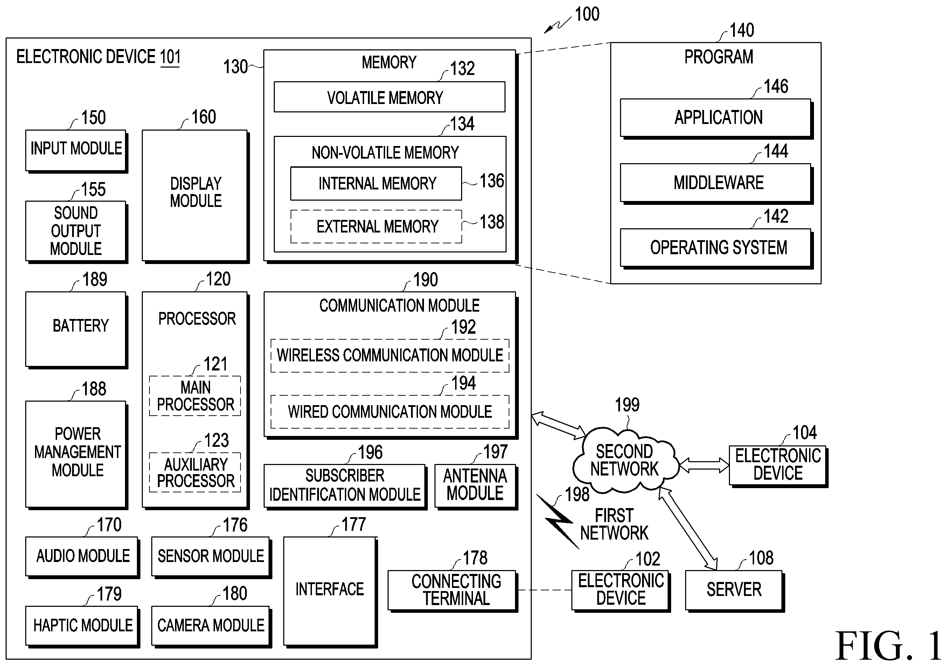

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

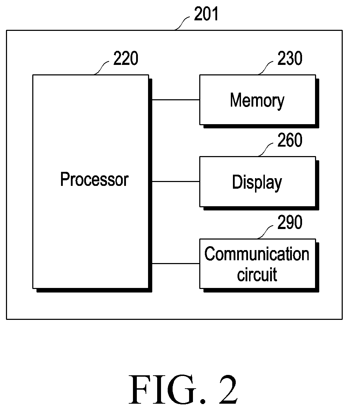

FIG. 2 is a block diagram illustrating a wearable electronic device according to an embodiment.

Referring to FIG. 2, the electronic device 201 may include a processor 220, memory 230, a display 260, and a communication circuit 290.

According to an embodiment, the processor 220 may perform overall control operations of the electronic device 201. According to an embodiment, the processor 220 may execute software (e.g., the program 140 in FIG. 1) to control at least one other component (e.g., a hardware or software component) of the electronic device 201 connected to the processor 220, and may perform data processing or computation, based on an instruction. According to an embodiment, the instruction may include a machine-language command processable by the electronic device 201 or the processor 220. For example, the instruction may include a command corresponding to an operation instruction used in a program.

According to an embodiment, the processor 220 may provide a first grid mode including a plurality of first cells and a second grid mode including a plurality of second cells in a plurality of home screen edit modes.

According to an embodiment, when entering the second grid mode for free movement and/or arrangement of an object from the first grid mode, the processor 220 may provide the plurality of second cells obtained by multiplying the number of the plurality of first cells in the first grid mode by a power of a specified number (the square of the specified number), and the specified number may indicate a specified multiple (n).

According to an embodiment, when entry into the first grid mode among the plurality of home screen edit modes is identified, the processor 220 may display, on the display 260, the plurality of first cells (e.g. 24 cells) including cells (e.g., 4 cells) along a first horizontal axis and cells (e.g., 6 cells) along a first vertical axis, and when a selection of a first object from among a plurality of objects supported in the first grid mode is identified based on a user's input, the processor 220 may display the first object in a first area including a first number of first cells among the plurality of first cells. For example, when displaying, on a plurality of first cells of 4x6, a first object of a size of 2x1 (a first number of first cells) among a plurality of objects supported in the first grid mode, the processor 220 may display the first object in a first area including three first cells among the plurality of first cells of 4x6.

According to an embodiment, the processor 220 may configure the first grid mode as a reference grid that becomes a default size of an object.

According to an embodiment, the plurality of first cells may have a rectangular shape and may be arranged in rows and columns. According to an embodiment, each of the plurality of first cells may have a first size.

According to an embodiment, when the first object is moved based on a user's selection in the plurality of first cells, the processor 220 may control the first object to be moved in units of the first cells. According to an embodiment, the processor 220 may determine that each of the first cells has a width and a height of a first size. According to an embodiment, one cell having a width and a height of the first size may represent a cell having the minimum size among the plurality of first cells. For example, when each of the plurality of first cells including 24 cells, that is, 24 first cells, including the cells along the first horizontal axis having four cells and the cells along the first vertical axis having six cells, has a size of 1×1, the first object may be moved in a minimum unit of a 1×1-sized cell.

According to an embodiment, when entry into the second grid mode among the plurality of home screen edit modes is identified, the processor 220 may configure a plurality of second cells (e.g., 1,500 cells) obtained by multiplying the number (e.g., 24 cells) of the plurality of first cells by a power of a specified multiple (e.g., 25) (e.g., the square of 25).

According to an embodiment, when entry into the second grid mode among the plurality of home screen edit modes is identified, the processor 220 may configure a plurality of second cells (e.g., 1,500 cells) including cells (e.g., 100 cells) along a second horizontal axis, obtained by multiplying the number of cells (e.g., 4 cells) along the first horizontal axis among the plurality of first cells by a specified multiple (e.g., 25), and cells (e.g., 150 cells) along a second vertical axis, obtained by multiplying the number of cells (e.g., 6 cells) along the first vertical axis among the plurality of cells by a specified multiple (e.g., 25), and may display the plurality of second cells on the display 260.

According to an embodiment, when a selection of the first object is identified by a user's input among the plurality of second cells supported in the second grid mode, the processor 220 may display the first object in a second area including a second number of second cells among the plurality of second cells. According to an embodiment, the second number may indicate the first number for displaying the first object in the first grid mode multiplied by a power of a specified number, and the specified number may indicate a multiple. According to an embodiment, the processor 220 may display the first object on the second number of second cells obtained by multiplying the first number specified for displaying the first object in the first grid mode by a power of a specified multiple. For example, when displaying a first object having a size of 2x1 among the plurality of objects supported in the first grid mode on a plurality of second cells of 100x150, the processor 220 may change the first object having a size of 2×1 (two cells) to a size of 50×25 (e.g., 1,250 cells), which is obtained by multiplying the size of 2x1 by a power of a specified multiple (e.g., 25) (e.g., the square of 25), and display the first object in a second area including 1,250 second cells among the plurality of second cells of 100×150.

According to an embodiment, when the number of the plurality of first cells in the first grid mode is W x L, the number of the plurality of second cells in the second grid mode may be set to (W x N) x (L x N), where W is the number of cells in the horizontal axis, L is the number of cells along the vertical axis, and N is an integer.

According to an embodiment, the processor 220 may set the minimum movable distance of the first object in the second grid mode to 1/N of the minimum movable distance of the first object in the first grid mode.

According to an embodiment, the processor 220 may provide the second grid mode as an optional fine grid that allows free arrangement of an object and/or resizing of the object.

According to an embodiment, the plurality of second cells may have a rectangular shape and be arranged in rows and columns.

According to an embodiment, each of the plurality of second cells may have a second size different from the first size of each of the plurality of first cells, and the first size may be larger than the second size.

According to an embodiment, when the first object is moved based on a user's selection in the plurality of second cells, the processor 220 may control the first object to be moved in units of the second cells. According to an embodiment, the processor 220 may determine that each of the second cells has a width and a height of a second size. According to an embodiment, one cell having a width and a height of the second size may represent a cell having the minimum size among the plurality of second cells. For example, when each of the plurality of first cells including 24 cells, that is, 24 first cells, including cells along the first horizontal axis having four cells and cells along the first vertical axis having six cells, has a size of 1×1, the first object may be moved in a minimum unit of a 1×1-sized cell. For example, when a plurality of first cells including 24 cells in the first grid mode includes one 1×1-sized cell and the processor 220 moves a first object by using the one cell as a minimum unit, each of the plurality of second cells including 1,500 cells may have a size of 1/25 x 1/25, and thus the plurality of second cells include one cell of the second size of 1/25 x 1/25, and the processor 220 may move the first object by using the one cell as a minimum unit.

According to an embodiment, an object may be a component that may be provided in a home screen, and may include, for example, a widget and/or an icon that can rapidly provide content and/or an application.

In the electronic device 201 according to an embodiment, the structure of a home screen that was integrated may be separated into a grid system and an object system and provided. Accordingly, in the first grid mode including a plurality of first cells, the electronic device may provide an environment in which objects can be arranged neatly, and in the second grid mode including a plurality of second cells which exceed the plurality of first cells in the first grid mode by a predetermined number, the electronic device may provide an environment in which objects can be freely moved and arranged.

According to an embodiment, the processor 220 may support a first plurality of objects having sizes corresponding to a first number of first cells set to a default size in a first grid mode. For example, the processor 220 may support the use of a first plurality of objects including an object having a size of 1×1, an object having a size of 2×1, an object having a size of 2×2, and an object having a size of 4×2 in the first grid mode.

According to an embodiment, the processor 220 may support, in a second grid mode, a second plurality of objects having sizes corresponding to a second number of second cells, the third plurality of objects having an intermediate size between the second plurality of objects, and a decorative object having no touch interaction. According to an embodiment, the processor 220 may determine that the second number equals the first number multiplied by a power of a specified number (e.g., the square of the specified number), and the specified number indicates a multiple. For example, the processor 220 may support use, in the second gride mode, of a second plurality of objects including an object having a size of 25x25, an object having a size of 50x25, an object having a size of 50x50, and an object having a size of 100x50, which are obtained by changing a first plurality of objects having sizes corresponding to a first number of first cells in the first grid mode into sizes (a second number of second cells) obtained by multiplying the sizes of the first plurality of objects by a power of a specified multiple. For example, the processor 220 may support use, in the second gride mode, of a third plurality of objects that include an object having a size of 30x25 which is an intermediate size between an object having a size of 25x25 and an object having a size of 50x25, an object having a size of 50x35 which is an intermediate size between an object having a size of 50x25 and an object having a size of 50x50, and an object having a size of 75x50 which is an intermediate size between an object having a size of 50x50 and an object having a size of 100x50. For example, the processor 220 may support use, in the second grid mode, of a sticker object having no touch interaction for decorating a home screen according to a user's preference.

According to an embodiment, when the processor 220, while displaying a first object selected by a user's input among the plurality of objects in the second grid mode, identifies a change in the size of the first object (the size of a second area including a second number of second cells among the plurality of second cells) based on the user's selection, the processor 220 may determine whether the change in the size of the object is equal to or less than a threshold value or equal to or greater than the threshold value. According to an embodiment, when the change in the size of the object is equal to or less than the threshold value, the processor 220 may display a layout of the type of the first object before the size change at the center of the first object with the changed size. According to an embodiment, the layout of the first object may indicate the type of the first object, and may include, for example, an image that may indicate the type of the first object. According to an embodiment, when the change in the size of the object is equal to or greater than the threshold value, the processor 220 may display the layout of the first object changed to correspond to the change in the size of the first object, at the center of the first object with the changed size. For example, the processor 220 may, while arranging and displaying a first object having a layout of an object indicating the type of the object in the second grid mode, identify a change in the size of the first object. When the size of the first object is identified as being equal to or less than a threshold value of 70%, the processor 220 may display the layout of the first object before the size change at the center of the first object with the changed size, and when the size of the first object is identified as being equal to or greater than the threshold value of 70%, the processor 220 may display the layout of the first object, which is changed to correspond to the change in the size of the first object, at the center of the first object with the changed size.

According to an embodiment, when the user's selection for entering a home screen edit mode is identified, the processor 220 may display a grid mode selection screen including a check box for selecting one of a first grid mode and second grid mode provided in the home screen edit mode.

According to an embodiment, when a gesture (e.g., a tap for 3 seconds or more) for changing a grid mode is detected in a first grid mode or a second grid mode among home screen edit modes, the processor 220 may provide a grid mode selection screen on which the first grid mode and the second grid mode can be selected, and may switch to the second grid mode or the first grid mode selected by the user's input on the grid mode selection screen.

According to an embodiment, when a gesture (e.g., a tap for 3 seconds or more) for changing the grid mode is detected on a standby screen or an application execution screen of the electronic device, the processor 220 may provide a grid mode selection screen for selecting a first grid mode or a second grid mode.

According to an embodiment, when the processor 220 switches a home screen edit mode from the first grid mode to the second grid mode or identifies termination of the home screen edit mode, the processor 220 may store, in the memory 230, information (e.g., an object type, an object size, and a location at which the object is disposed) on a plurality of objects displayed in the first grid mode as object information last stored in the previous first grid mode.

According to an embodiment, when the processor 220 switches a home screen edit mode from the second grid mode to the first grid mode or identifies termination of the home screen edit mode, the processor 220 may store, in the memory 230, information (e.g., an object type, an object size, and a location at which an object is arranged) of a plurality of objects displayed in the second grid mode as object information last stored in the previous second grid mode.

According to an embodiment, when a switch from the first grid mode to the second grid mode is identified, the processor 220 may store, in the memory 230, object information last stored in the previous first grid mode, and may identify whether there is previous usage history information of the second grid mode. According to an embodiment, when the existence of the previous usage history information of the second grid mode is identified, the processor 220 may compare the object information last stored in the previous first grid mode, which is stored in the memory 230, and object information last stored in the previous second grid mode, and may identify, based on a comparison result, whether new object information, which is not stored in the object information last stored in the previous second grid mode, exists in the object information last stored in the previous first grid mode. According to an embodiment, when it is identified that the existence of new object information, which is not stored in object information last stored in the previous second grid mode, exists in the object information last stored in the previous first grid mode, the processor 220 may display a plurality of objects in the second grid mode, based on the object information last stored in the previous second grid mode, and may additionally display the new object information, which is not stored in the object information last stored in the previous second grid mode, on the last home screen among a plurality of home screens of the second grid mode. According to an embodiment, when it is not identified that the new object information, which is not stored in the object information last stored in the previous second grid mode, exists in the object information last stored in the previous first grid mode, the processor 220 may display a plurality of objects in the second grid mode, based on the object information last stored in the previous second grid mode.

According to an embodiment, when the existence of the previous usage history information of the second grid mode is not identified, the processor 220 may, based on a user's selection for displaying objects in the same manner as in the previous first grid mode, identify object information last stored in the previous first grid mode from the memory 230, and display a plurality of objects, displayed in the first grid mode based on the object information last stored in the previous first grid mode, in the second grid mode in the same manner. According to an embodiment, the processor 220 may change a first plurality of objects displayed in the first grid mode into the plurality of objects, and may display the changed second plurality of objects in the second grid mode.

According to an embodiment, when a switch from the second grid mode to the first grid mode is identified, the processor 220 may store, in the memory 230, object information last stored in the previous second grid mode, and may identify whether there is previous usage history information of the first grid mode. According to an embodiment, when the existence of the previous usage history information of the first grid mode is identified, the processor 220 may compare the object information last stored in the previous second grid mode, which is stored in the memory 230, and object information last stored in the previous first grid mode, and identify, based on the comparison result, whether new object information, which is not stored in the object information last stored in the previous first grid mode, exists in the object information last stored in the previous second grid mode. According to an embodiment, when it is identified that the new object information, which is not stored in the object information last stored in the previous first grid mode, exists in object information last stored in the previous second grid mode, the processor 220 may display a plurality of objects in the first grid mode, based on the object information last stored in the previous first grid mode, and may add and display the new object, which is not stored in the object information last stored in the previous first grid mode, on the last home screen among a plurality of home screens of the first grid mode. According to an embodiment, when it is not identified that the new object information, which is not stored in the object information last stored in the previous first grid mode, exists in the object information last stored in the previous second grid mode, the processor 220 may display a plurality of objects in the first grid mode, based on the object information last stored in the previous first grid mode. According to an embodiment, when the existence of previous usage history information of the first grid mode is not identified, the processor 220 may identify the object information last stored in the previous second grid mode from the memory 230, based on a user's selection for displaying objects in the same manner as in the previous second grid mode. According to an embodiment, the processor 220 may identify whether an object having a size not supported in the first grid mode exists, based on the object information last stored in the previous second grid mode. According to an embodiment, when the existence of an object having a size not supported in the first grid mode is not identified, the processor 220 may display a plurality of objects, displayed in the second grid mode based on the object information last stored in the previous second grid mode, in the first grid mode in the same manner. According to an embodiment, the processor 220 may change a second plurality of objects displayed in the second grid mode to the first plurality of objects in the memory 230, and display the changed first plurality of objects in the first grid mode.

According to an embodiment, when the existence of an object (e.g., a third plurality of objects having an intermediate size between the second plurality of objects) having a size not supported in the first grid mode is identified based on the object information last stored in the previous second grid mode, the processor 220 may change the size of the object having the size not supported in the first grid mode to a size of an object having a size closest to the size of the object having the size not supported in the first grid mode, among a first plurality of objects supported in the first grid mode.

According to an embodiment, when the object having a size not supported in the first grid mode has an intermediate size between object A and object B among the first plurality of objects supported in the first grid mode, the processor 220 may change the size of the object to the size of object B if the object is 70% or more of the size of object B, and may change the size of the object to the size of object A if the object is 70% or less of the size of object B. For example, when the object having a size not supported in the first grid mode is an object having a size of 30×25, which is an intermediate size between an object having a size of 25×25 and an object having a size of 50×25, the processor 220 may, if the object having the size of 30x25 is 75% or more of the size of the object having a size of 50x25, change the object having a size of 30x25 to an object having a size of 50x25, and change the object having the size of 50x25 to an object having a size of 2x1 for display. When the object having a size of 30×25 is 75% or less of the size of the object having a size 50×25, the processor 220 may change the object having a size 30×25 to an object having a size 25×25, and change the object having a size 25×25 to an object having a size 1×1 for display.

According to an embodiment, when the object having a size not supported in the first grid mode is displayed in the first grid mode before the size change, the processor 220 may identify a cell that occupies the largest portion of the object, and may display an object changed to a size supported in the first grid mode, based on the cell.

According to an embodiment, the processor 220 may identify the existence of a decorative object, based on the object information last stored in the previous second grid mode, and may hide the decorative object so as not to display the decorative object.

According to an embodiment, if the existence of previous usage history information is not identified when switching from the first grid mode to the second grid mode, the processor 220 may provide a new second grid mode in which no objects are arranged, based on the user's selection for displaying the second grid mode configured as a default.

According to an embodiment, if the existence of previous usage history information is not identified when switching from the second grid mode to the first grid mode, the processor 220 may provide a new first grid mode in which no objects are arranged, based on the user's selection for displaying a first grid mode configured as a default.

According to an embodiment, when movement of a first object is identified while the first object is displayed in a plurality of second cells of a second grid mode among the plurality of home screen edit modes, the processor 220 may display a guide line for arranging the first object while the first object is moved.

According to an embodiment, when the processor 220 identifies movement of the first object in a plurality of second cells of the second grid mode, identifies the movement direction of the first object as a horizontal direction, and identifies vertical alignment (e.g., left or right alignment) with a second object, displayed at a position closest to the first object, among a plurality of objects displayed in the plurality of second cells while the first object moves in the horizontal direction (e.g., the left or the right direction), the processor 220 may display a guide line capable of indicating left alignment between the first object and the second object. According to an embodiment, when the first object moves in the horizontal direction (e.g., the left or right direction) in the plurality of second cells of the second grid mode, the processor 220 may display a guide line capable of indicating the vertical alignment (e.g., the left or right alignment) between the first object and the second object, if it is identified that the first object has entered a threshold range for identifying the vertical alignment (e.g., the left or right alignment) with the second object. According to an embodiment, when the first object held by a user's input for movement is dropped by the user's input at a time when the guide line capable of indicating the vertical alignment (e.g., left or right alignment) between the first object and the second object is displayed, the processor 220 may display the first object in a plurality of cells, among the plurality of second cells, in which the first object is left-aligned with the second object, together with a snapping effect.

According to an embodiment, when the processor 220 identifies movement of the first object in a plurality of second cells of the second grid mode, identifies the movement direction of the first object as a vertical direction, and identifies horizontal alignment (e.g., top alignment or bottom alignment) with a third object positioned closest to the first object, among a plurality of objects displayed in the plurality of second cells while the first object moves in the vertical direction (e.g., the upward direction or the lower direction), the processor 220 may display a guide line capable of indicating the horizontal alignment (e.g., the top alignment or the bottom alignment) between the first object and the third object. According to an embodiment, when it is identified that the first object enters a threshold range for identifying the horizontal alignment (e.g., top alignment or bottom alignment) with the third object while moving in the vertical direction in an area including the plurality of second cells of the second grid mode, the processor 220 may display a guide line capable of indicating the horizontal alignment (e.g., top alignment or bottom alignment) between the first object and the third object. According to an embodiment, when the first object, which has been held by a user's input for movement is dropped by the user's input at the time of displaying the guide line capable of indicating the horizontal alignment (e.g., top alignment or bottom alignment) between the first object and the third object, the processor 220 may display the first object in a plurality of cells, among the plurality of second cells, in which the first object is top-aligned with the third object, together with a snapping effect.

According to an embodiment, the processor 220 may display a decorative object, having no touch interaction selected by a user's input, to overlap a first object disposed in a second grid mode among home screen edit modes.

According to an embodiment, the processor 220 may separate a layer in which the first object is disposed from a layer in which the decorative object is disposed, and may provide a touch interaction to the layer in which the first object is disposed, and may not provide a touch interaction to the layer in which the decorative object is disposed.

According to an embodiment, the processor 220 may provide an upper layer in which the decorative object is disposed such that the decorative object can be displayed to overlap the upper side of the first object and a lower layer in which the decorative object is disposed such that the decorative object can be displayed to overlap the lower side of the first object.

According to an embodiment, while displaying the decorative object to overlap the upper side of the first object in the second grid mode, the processor 220 may, when a gesture (e.g., a long press) for changing a layer of the decorative object is identified in a layer in which the object is disposed, change the layer to a lower layer in which the decorative object is disposed, and display the decorative object to overlap the lower side of the first object. According to an embodiment, while displaying the decorative object to overlap the lower side of the first object in the second grid mode, the processor 220 may, when a gesture (e.g., long press) for changing a layer of the decorative object is identified in a layer in which the object is disposed, change the layer to an upper layer in which the decorative object is disposed, and display the decorative object to overlap the upper side of the first object.

According to an embodiment, the processor 220 may dispose and display the decorative object, selected by a user's input in the second grid mode, at a location to which the decorative object is moved by the user, and may resize and display the decorative object to a size supported in the second grid mode, based on the user's selection.

According to an embodiment, the memory 130 may be implemented to be substantially identical or similar to the memory 130 in FIG. 1.

According to an embodiment, the memory 230 may store object information last stored in a previous first grid mode among home screen edit modes and object information last stored in a previous second grid mode among the home screen edit mode.

According to an embodiment, the display 260 may be implemented to be substantially identical or similar to the display module 160 in FIG. 1.

According to an embodiment, the display 260 may display a plurality of objects in a first grid mode including a plurality of first cells among home screen edit modes.

According to an embodiment, the display 260 may display a plurality of objects in a second grid mode including a plurality of second cells having a specified multiple of the number of the plurality of first cells among the home screen edit modes.

According to an embodiment, the communication circuit 290 may be implemented to be substantially identical or similar to the communication module 190 in FIG. 1.

According to an embodiment, the communication circuit 290 may include at least one of a wireless LAN circuit (not shown) and a short-range communication circuit (not shown).

According to an embodiment, the communication circuit 290 may include an NFC communication circuit, a BLE communication circuit, a UWB communication circuit capable of transmitting/receiving a UWB signal to/from an external device by using a plurality of antennas, a Wi-Fi communication circuit, and/or a Bluetooth legacy communication circuit.

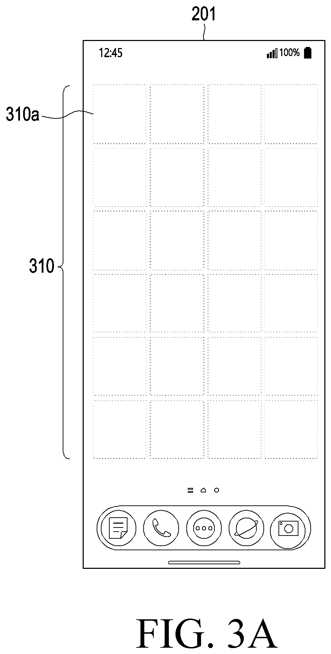

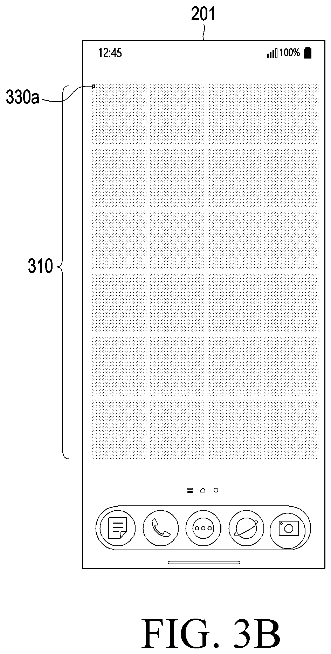

FIGS. 3A and 3B are diagrams illustrating a home screen edit mode in an electronic device according to an embodiment.

Referring to FIG. 3A, according to an embodiment, an electronic device 201 (e.g., the electronic device 101 in FIG. 1 and/or the electronic device 201 in FIG. 2) may, when entry into a first grid mode among a plurality of home screen edit modes is identified, display a plurality of first cells 310 (e.g., 24 cells) including cells (e.g., 4 cells) along a first horizontal axis and cells (e.g., 6 cells) along a first vertical axis on a display 260 (e.g., the display 260 in FIG. 2) of the electronic device. According to an embodiment, the electronic device 201, when moving a first object displayed based on a user's selection in the plurality of first cells, may move the first object by a minimum unit of one cell 310a having a width and a height of a first size of 1×1.

Referring to FIG. 3B, according to an embodiment, the electronic device 201 (e.g., the electronic device 101 in FIG. 1 and/or the electronic device 201 in FIG. 2), when entry into a second grid mode among the home screen edit mode is identified, may display, on a display 260 (e.g., the display 260 in FIG. 2) of the electronic device 201, a plurality of second cells 330 (e.g., 1,500 cells) including cells along a second horizontal axis (e.g., 100 cells) obtained by multiplying the number (e.g., 4 cells) of the cells along the first horizontal axis by a specified multiple (x25) and cells along a second vertical axis (e.g., 150 cells) obtained by multiplying the number (e.g., 6 cells) of the cells along the first vertical axis by a specified multiple (x25). According to an embodiment, the electronic device 201, when moving a first object displayed based on a user's selection in the plurality of second cells, may move the first object by using one cell 330a, having a size of 1/25 x 1/25 corresponding to a second size that the width and the height have, as a minimum unit.

According to an embodiment, the electronic device 201 may provide a second grid mode including 1,500 (100×150) second cells 330 obtained by multiplying the 24 (4×6) first cells 310 of the first grid mode by 25²=625, which is a specified multiple (e.g., 25) raised to a power, so that users may more freely move and display objects.

In the above-described example in FIG. 3B illustrates a specified multiple (n) as "25," the disclosure is not limited thereto. The specified multiple (n) may vary depending on the performance of the electronic device, or an option selectable by a user may be provided.

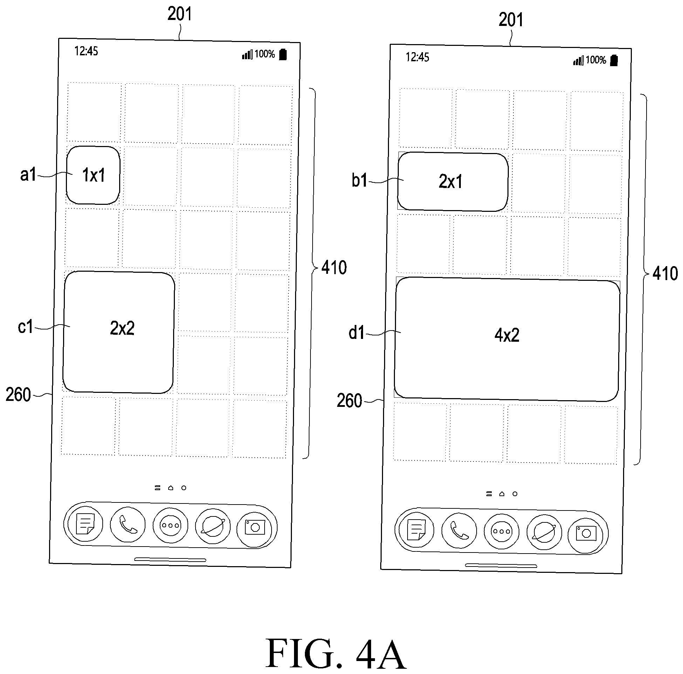

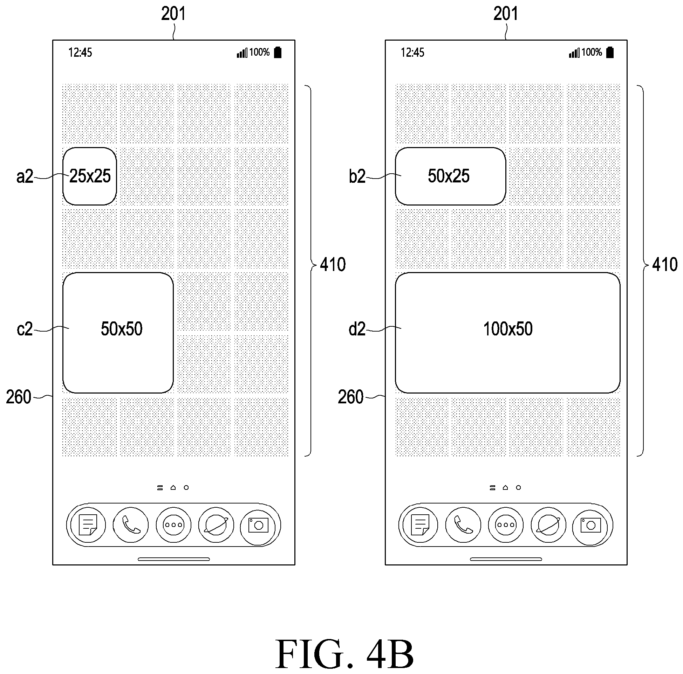

FIGS. 4A and 4B are diagrams illustrating an object displayed in a home screen edit mode in an electronic device according to an embodiment.

Referring to FIG. 4A, according to an embodiment, while displaying the plurality of first cells (e.g., 24 cells), including cells (e.g., 4 cells) along a first horizontal axis and cells (e.g., 6 cells) along a first vertical axis, on the display 260 of the electronic device 201 in a first grid mode among a plurality of home screen edit modes, an electronic device 201 (e.g., the electronic device 101 in FIG. 1 and/or the electronic device 201 in FIG. 2) may provide a plurality of objects, including an object a1 having a size of 1×1, an object b1 having a size of 2×1, an object c1 having a size of 2×2, and an object d1 having a size of 4×2, as a first plurality of objects supported in the first grid mode.

Referring to FIG. 4B, according to an embodiment, while displaying a plurality of second cells (e.g., 1,500 cells) including cells (100 cells) along a second horizontal axis, obtained by multiplying the number (e.g., 4 cells) of cells along the first horizontal axis by a specified multiple (x25), and cells (e.g., 150 cells) along a second vertical axis, obtained by multiplying the number (e.g., 6 cells) of cells along the first vertical axis by a specified multiple (x25), on the display 260 of the electronic device 201 in a second grid mode among home screen edit modes, the electronic device 201 (e.g., the electronic device 101 in FIG. 1 and/or the electronic device 201 in FIG. 2) may provide a plurality of objects, including an object a2 having a size of 25 x 25, an object b2 having a size of 50 x 25, an object c2 having a size of 50 x 50, and an object d2 having a size of 100 x 50, as a second plurality of objects supported in the second grid mode, which are obtained by multiplying the respective sizes of the first plurality of objects supported in the first grid mode by a power of a specified multiple (25).

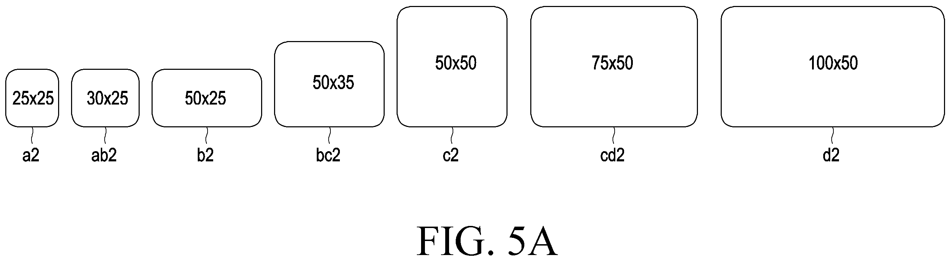

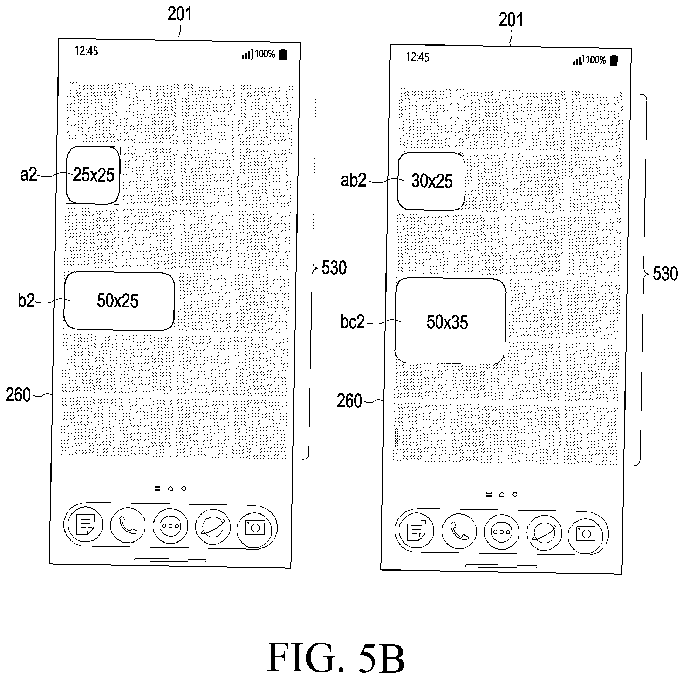

FIGS. 5A and 5B are diagrams illustrating an object displayed in a home screen edit mode in an electronic device according to an embodiment.

Referring to FIGS. 5A and 5B, according to an embodiment, an electronic device 201 (e.g., the electronic device 101 in FIG. 1 and/or the electronic device 201 in FIG. 2) may support, in a second grid mode among home screen edit modes, a second plurality of objects and a third plurality of objects having an intermediate size between the second plurality of objects.

As shown in FIG. 5A, according to an embodiment, the electronic device may, in a second grid mode among a plurality of home screen edit modes, support a plurality of objects, including an object a2 having a size of 25×25, an object b2 having a size of 50×25, an object c2 having a size of 50×50, and an object d2 having a size of 100×50, which are obtained by changing the first plurality of objects supported in the first grid mode to the sizes obtained by multiplying the sizes of the first plurality of object by a power of a specified multiple (25), as a second plurality of objects supported in the second grid mode. According to an embodiment, the electronic device may support, as a third plurality of objects supported in the second grid mode, a plurality of objects that include an object ab2 having a size of 30x25, which is an intermediate size between the object a2 having a size of 25×25 and the object b2 having a size of 50x25, an object bc2 having a 50x35 size, which is an intermediate size between the object b2 having a size of 50x25 and the object c2 having a size of 50×50, and an object cd2 having a size of 75x50, which is an intermediate size between the object c2 having a size of 50×50 and the object d2 having a size of 100×50.

Referring to FIG. 5B, according to an embodiment, the electronic device 201 (e.g., the electronic device 101 in FIG. 1 and/or the electronic device 201 in FIG. 2) may, while displaying a plurality of second cells 530 (e.g., 1,500 cells) including cells (e.g., 100 cells) along a second horizontal axis and cells (e.g., 150 cells) along a second vertical axis on a display 260 of the electronic device 201 in a second grid mode among a plurality of home screen edit modes, display an object a2 having a size of 25×25 and an object b2 having a size of 50×25, which are obtained by changing the first plurality of objects to sizes obtained by multiplying the sizes of the first plurality of objects by a power of a specified multiple (25), and an object ab2 having a size of 30×25,m which is the intermediate size between the object a2 having a size of 25×25 and the object b2 having a size of 50×25, and an object bc2 having a size of 50×35, which is the intermediate size between the object b2 having a size of 50×25 and the object c2 having a size of 50×50, as a third plurality of objects supported in the second grid mode.

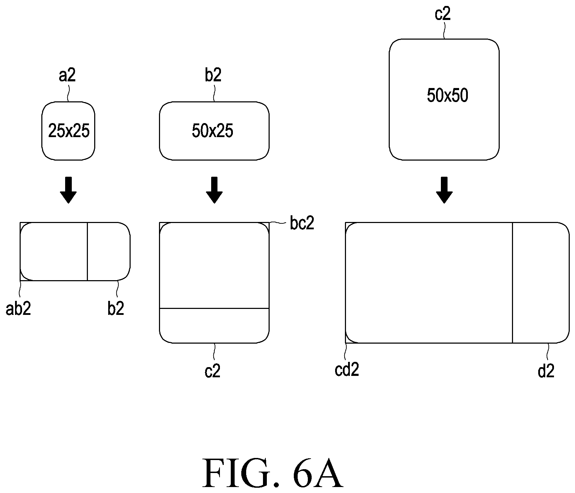

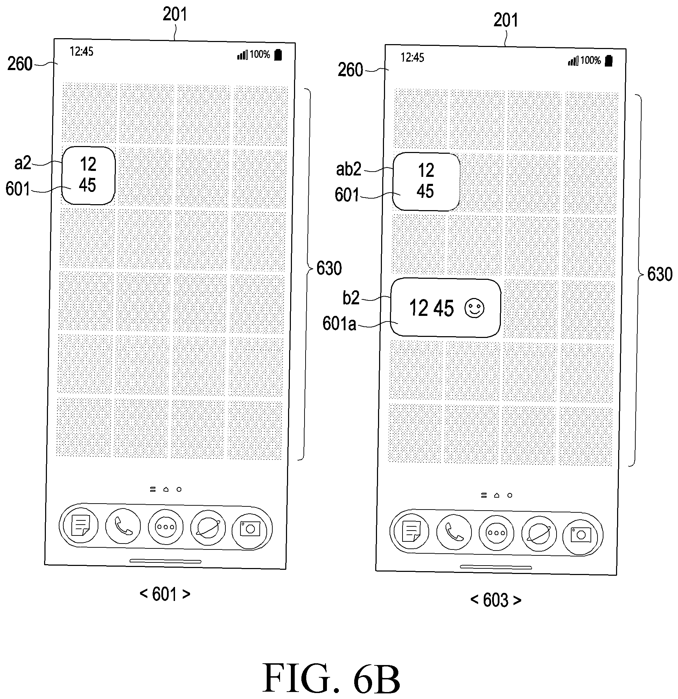

FIGS. 6A and 6B are diagrams illustrating a layout of an object displayed in a home screen edit mode in an electronic device according to an embodiment.

As shown in FIG. 6A, according to an embodiment, an electronic device (e.g., the electronic device 101 in FIG. 1 and/or the electronic device 201 in FIG. 2) may, when an object a2 having a size of 25x25 is changed to an object ab2 having a size of 30x25 in a second grid mode among a plurality of home screen edit modes, identify that the change ratio of the object a2 is equal to or less than a threshold value of 70%, and display the layout of the object, which was displayed to indicate the type of the object in the object a2 having a size 25x25 before the size change, at the center of the object ab2 having a size of 30x25. According to an embodiment, when the object a2 having a size of 25x25 is changed to an object b2 having a size of 50x25, the electronic device may identify that the change ratio of the object a2 is equal to or greater than the threshold value of 70%, may change the size of the layout of the object to correspond to the size of the object b2, and may then display the layout of the object, the size of which has been changed, at the center of the object b2 having a size of 50x25.

According to an embodiment, when the object b2 having a size of 50x25 is changed into an object bc2 having a size of 50x35 in the second grid mode among the home screen edit modes, the electronic device may identify that the change ratio of the object b2 is equal to or less than a threshold value of 70%, and display the layout of the object, which was displayed to indicate the type of the object in the object b2 having a size of 50x25 before the size change, at the center of the object bc2 having a size of 50x35. According to an embodiment, when the object b2 having a size of 50x25 is changed to an object c2 having a size of 50x50, the electronic device may identify that the change ratio of the object b2 is equal to or greater than a threshold value of 70%, change the size of the object's layout to correspond to the size of the object c2, and then display the layout of the object, the size of which has been changed, at the center of the object c2 having a size of 50x50.

According to an embodiment, when the object c2 having a size of 50x50 is changed to an object cd2 having a size of 75x50 in the second grid mode among the home screen edit modes, the electronic device may identify the change ratio of the object c2 as being equal to or less than a threshold value of 70%, and may display the layout of the object, which was displayed to indicate the type of the object in the object c2 having a size of 50x50 before the size change, at the center of the object cd2 having a size of 75x50. According to an embodiment, when the object c2 having a size 50x50 is changed to an object d2 having a size of 100x50, the electronic device may identify that the change ratio of the object c2 is equal to or greater than a threshold value of 70%, may change the size of the layout of the object to correspond to the size of the object d2, and may then display the layout of the object, the size of which has been changed, at the center of the object d2 of a size of 100x50.

Referring to FIG. 6B, as in screen 601, according to an embodiment. an electronic device 201 (e.g., the electronic device 101 in FIG. 1 and/or the electronic device 201 in FIG. 2) may display an object a2 having a size of 25x25 in a plurality of second cells 630 (e.g., 1,500 cells) including cells (e.g., 100 cells) along a second horizontal axis and cells (e.g., 150 cells) along a second vertical axis in a second grid mode among home screen editing modes.

As in screen 603, according to an embodiment, the electronic device 201 may identify a size change of the object a2 having a size of 25x25. According to an embodiment, when identifying that the object a2 has been changed to an object ab2 having a size of 30×25, the electronic device 201 may identify a change ratio of the object a2 as being equal to or less than a threshold value of 70%, and may display a layout 601 ("1245") of the object, which has been displayed to indicate the type of the object in the object a2 having a size of 25×25 before the size change, at the center of the object ab2 having a size of 30×25.

According to an embodiment, when the electronic device 201 identifies a change of the object a2 into an object b2 having a size of 50x25, the electronic device 201 may identify the change ratio of the object a2 as being equal to or greater than a threshold value of 70%, may change the size of the object layout 601 to correspond to the size of the object b2, and may then display an object layout 601a having a changed size at the center of the object b2 having the size of 50x25.

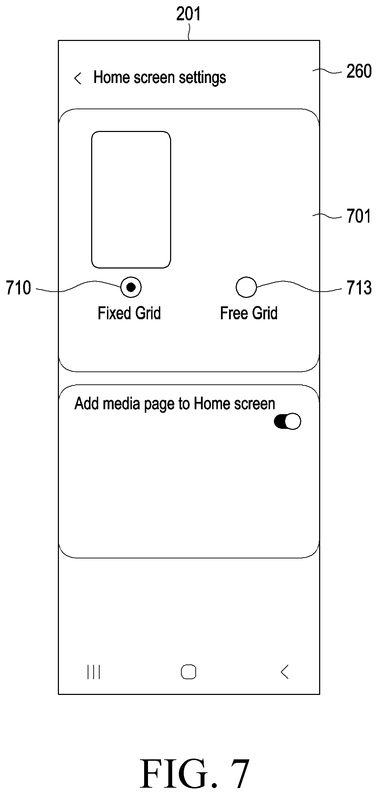

FIG. 7 is a diagram illustrating a change of a grid mode in a home screen edit mode in an electronic device according to an embodiment.

Referring to FIG. 7, according to an embodiment, an electronic device (e.g., the electronic device 101 in FIG. 1 and/or the electronic device 201 in FIG. 2) may display, when selection of a home screen edit mode is identified, a grid mode selection screen 701, including a checkbox 710 or 713 for selecting one of a first grid mode and a second grid mode provided in the home screen edit mode, on a display 260 (e.g., the display 260 in FIG. 2) of the electronic device.

According to an embodiment, the electronic device 201 may enter the first grid mode when the selection of the checkbox 710 for entering the first grid mode is identified in the grid mode selection screen 701, and may enter the second grid mode when the selection of the checkbox 713 for entering the second grid mode is identified.

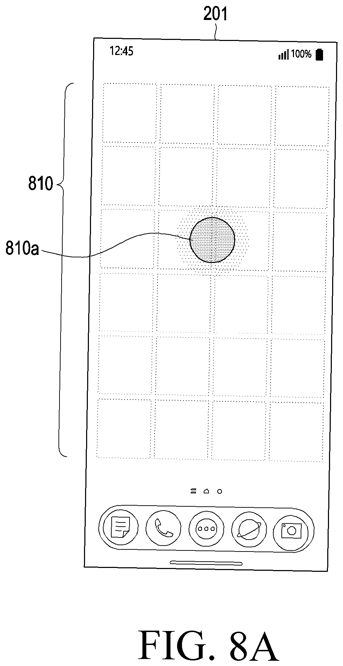

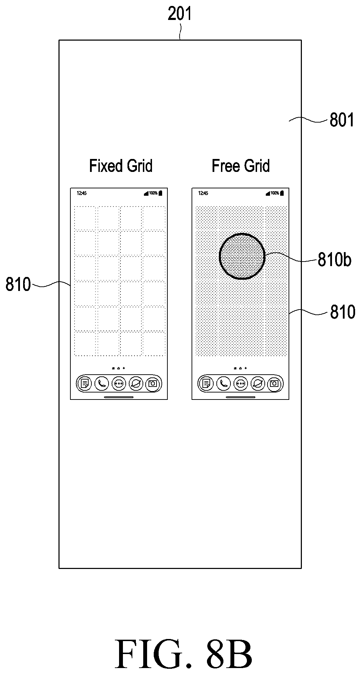

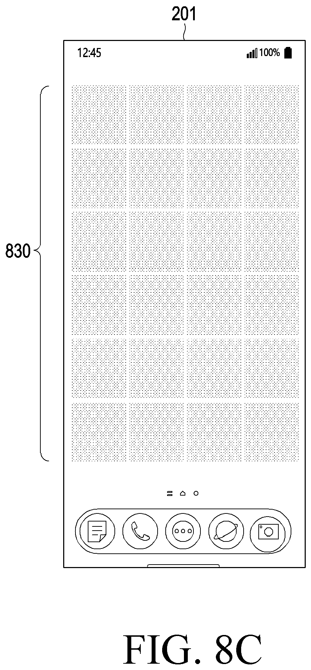

FIGS. 8A, 8B, and 8C are diagrams illustrating a change of a grid mode in a home screen edit mode in an electronic device according to an embodiment.

As shown in FIG. 8A, according to an embodiment, an electronic device (e.g., the electronic device 101 in FIG. 1 and/or the electronic device 201 in FIG. 2) may, while displaying a plurality of first cells 810 in a first grid mode among home screen edit modes, detect a gesture 810a (e.g., a tap for 3 seconds or more) for changing a grid mode in an arbitrary area of the plurality of first cells 810.

As shown in FIG. 8B, according to an embodiment, when the gesture 810a (e.g., a tap for 3 seconds or more) for changing the grid mode is detected in the arbitrary area of the plurality of first cells 810, the electronic device 201 may provide a grid mode selection screen 801 for selecting one of a first grid mode and a second grid mode. According to an embodiment, the electronic device 201 may identify a user's selection 810b in an area 813 for selecting the second grid mode in the grid mode selection screen 801.

As shown in FIG. 8C, according to an embodiment, when the user's selection 810b is identified in the area 813 for selecting a second grid mode in the grid mode selection screen 801, the electronic device 201 may switch to the second grid mode and display a plurality of second cells 830.

According to an embodiment, when the user's selection 810b is identified in an area 811 for selecting a first grid mode in the grid mode selection screen 801, the electronic device 201 may maintain the first grid mode.

FIGS. 8A to 8C illustrate that when a gesture (e.g., a tap for 3 seconds or more) for changing the grid mode is detected in the first grid mode, the grid mode selection screen 801 for selecting one of the first grid mode and the second grid mode may be provided. However, when a gesture 810a (e.g., a tap for 3 seconds or more) for changing the grid mode is detected in the second grid mode, the grid mode selection screen 801 for selecting one of the first grid mode and the second grid mode may be provided. According to an embodiment, when the gesture 810a (e.g., a tap for 3 seconds or more) for changing the grid mode is detected in a standby mode or in the execution screen of an application, the electronic device 201 may provide the grid mode selection screen 801 for selecting one of the first grid mode and the second grid mode.

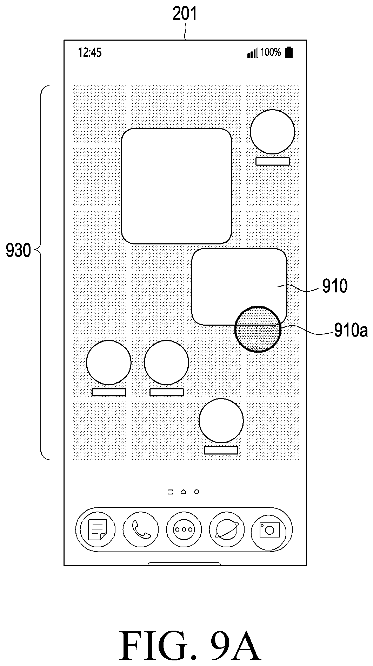

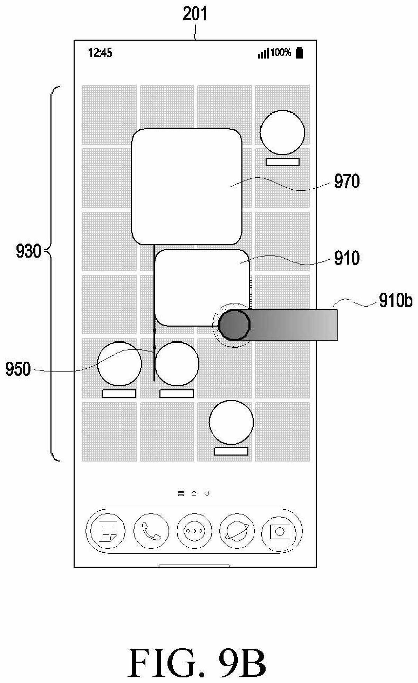

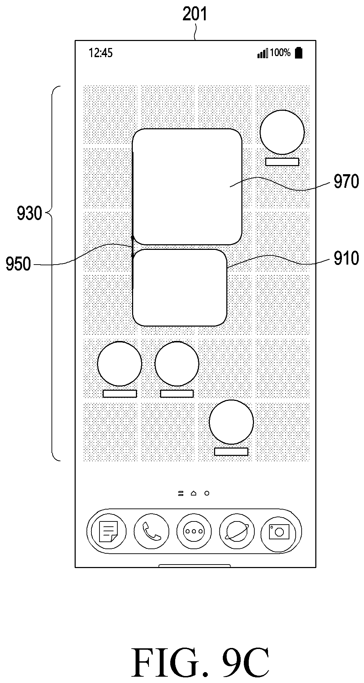

FIGS. 9A, 9B, and 9C are diagrams illustrating display of a guide line for arranging an object in a home screen edit mode in an electronic device according to an embodiment.

As shown in FIG. 9A, according to an embodiment, an electronic device (e.g., the electronic device 101 in FIG. 1 and/or the electronic device 201 in FIG. 2) may identify that a first object 910 is being held (910a) by a user's input while displaying a plurality of objects in a plurality of second cells 930 of a second grid mode among home screen edit modes.

As shown in FIG. 9B, according to an embodiment, the electronic device 201, while detecting leftward movement 910b of the first object 910 in a state in which the first object 910 is held (910a) by the user's input, may display a guide line 950 that may indicate left alignment between the first object 910 and a second object 970 located closest to the first object among a plurality of objects arranged in the plurality of second cells 930, when identifying the left alignment with the second object 970.

As shown in FIG. 9C, according to an embodiment, when the first object 910, which has been held by a user's input for movement, is dropped by the user's input at a time when the guide line 950 that may indicate left alignment between the first object 910 and the second object 970 is displayed, the electronic device 201 may display the first object 910 in a plurality of cells, among the plurality of second cells 930, in which the first object 910 is left-aligned with the second object 970, together with a snapping effect.

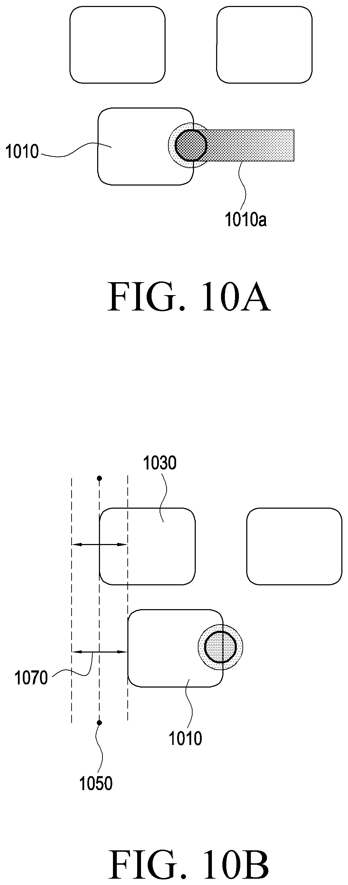

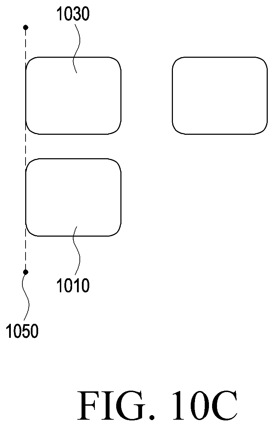

FIGS. 10A, 10B, and 10C are diagrams illustrating display of a guide line for arranging an object in a home screen edit mode in an electronic device according to an embodiment.

As shown in FIG. 10A, according to an embodiment, while displaying a plurality of objects in a plurality of second cells of a second grid mode among home screen edit modes, an electronic device (e.g., the electronic device 101 in FIG. 1 and/or the electronic device 201 in FIG. 2) may identify a leftward movement 1010a of a first object 910 in a state in which the first object 910 is held (910a) by a user's input.

As shown in FIG. 10B, according to an embodiment, when entry of a first object 1010 into a threshold range 1070 for identifying left alignment with a second object 1030 among a plurality of objects is identified while identifying the leftward movement of the first object 910 in a state in which the first object 910 is held (910a) by the user's input, the electronic device 201 may display a guide line 1050 that may indicate the left alignment between the first object 1010 and the second object 1030.

As shown in FIG. 10C, according to an embodiment, when the first object 1010, which has been held by a user's input for movement, is dropped by the user's input at a time when the guide line 1050 indicating that the left alignment between the first object 1010 and the second object 1030 is displayed, the electronic device 201 may display the first object 1010 in a plurality of cells, among the plurality of second cells, in which the first object 1010 is left-aligned with the second object 1030, together with a snapping effect.

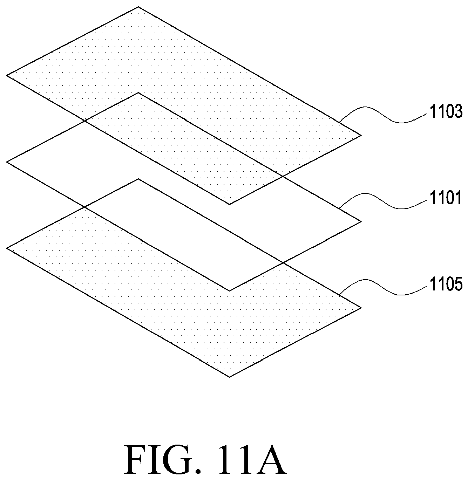

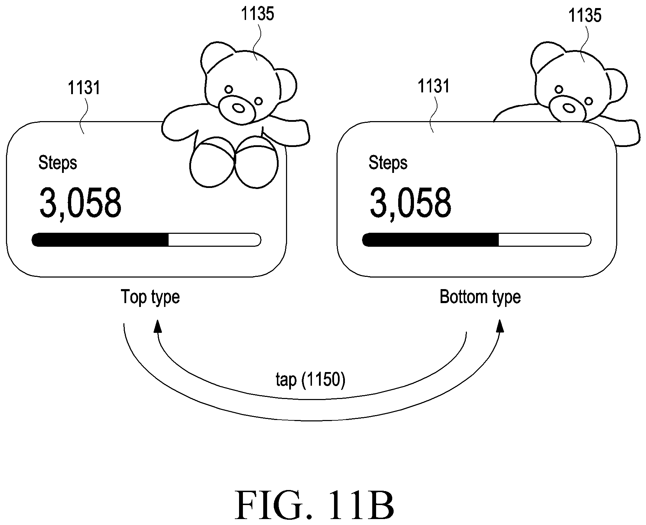

FIG. 11A and FIG. 11B are diagrams illustrating display of a decorative object in a home screen edit mode in an electronic device according to an embodiment.

Referring to FIG. 11A, according to an embodiment, an electronic device (e.g., the electronic device 101 in FIG. 1 and/or the electronic device 201 in FIG. 2) may separately provide a layer 1101 in which a first object having a touch interaction is disposed, and layers 1103 and 1105 in which decorative objects having no touch interaction are disposed.

According to an embodiment, the electronic device may provide an upper layer 1103 in which the decorative object is disposed such that the decorative object can be displayed to overlap the upper side of the first object, and a lower layer 1105 in which the decorative object is disposed such that the decorative object can be displayed to overlap the lower side of the first object.

Referring to FIG. 11B, while displaying a decorative object 1135 overlapping the upper side of the first object 1131 in a second grid mode among home screen edit modes, the electronic device may, when a tap 1150 (e.g., a long press) for changing a layer of the decorative object is identified in a layer in which the first object 1131 is disposed, change the layer to a lower layer in which the decorative object is disposed, and display the decorative object 1135 overlapping the lower side of the first object 1131. While displaying the decorative object 1135 overlapping the lower side of the first object 1131 in the second grid mode, the electronic device may, when a tap 1150 (e.g., long press) for changing the layer of the decorative object is identified in the layer in which the first object 1131 is disposed, change the layer to the upper layer in which the decorative object is disposed, and display the decorative object 1135 overlapping the upper side of the first object 1131.

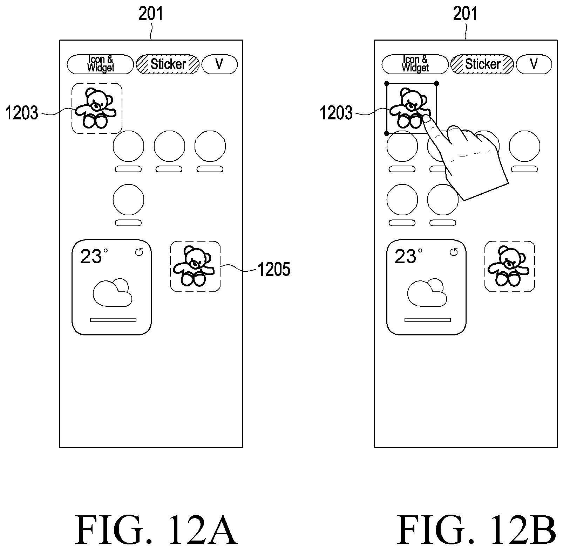

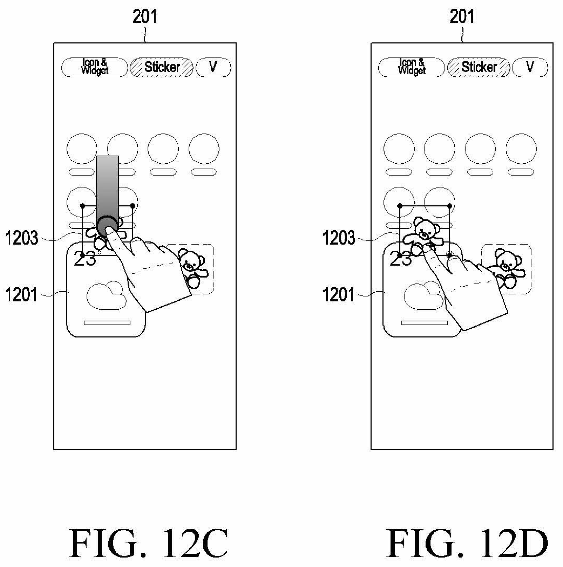

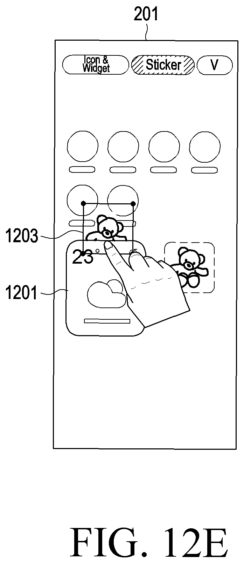

FIGS. 12A, 12B, 12C, 12D, and 12E are diagrams illustrating display of a decorative object in a home screen edit mode in an electronic device according to an embodiment.

As shown in FIG. 12A, according to an embodiment, an electronic device 201 (e.g., the electronic device 101 in FIG. 1 and/or the electronic device 201 in FIG. 2) may display a plurality of objects including decorative objects 1203 and 1205 having no touch interaction in a plurality of second cells of a second grid mode.

As shown in FIGS. 12B and 12C, according to an embodiment, the electronic device 201 may move, based on a user's selection, the decorative object 1203 to the location of a first object 1201 having a touch interaction, and display the decorative object 1203 in an overlapping manner.

As shown in FIGS. 12D and 12E, according to an embodiment, while the decorative object 1203 is displayed to overlap the upper side of the first object 1201, the electronic device 201 may, when a gesture (e.g., a long press) for changing a layer of the decorative object is identified in a layer where the first object 1201 is disposed, change the layer of the decorative object 1203 to a lower layer, and display the decorative object 1203 so as to overlap the lower side of the first object 1201.

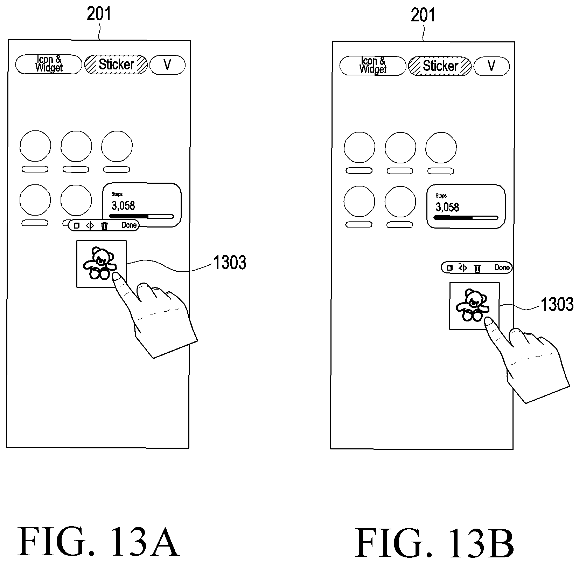

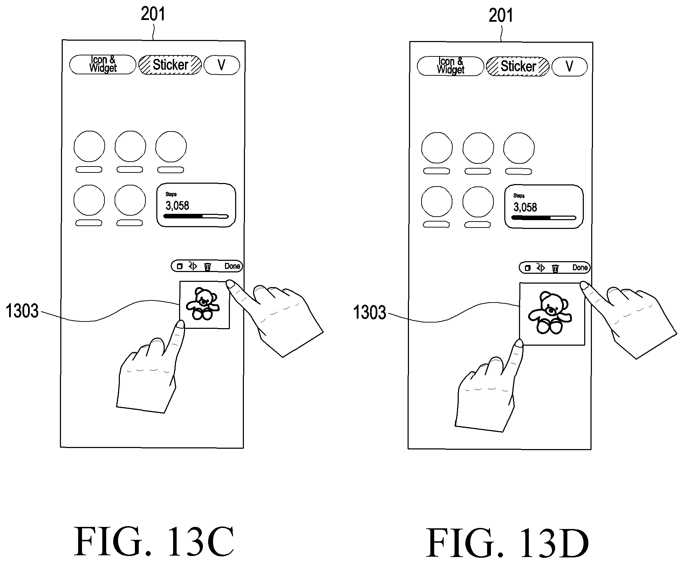

FIGS. 13A, 13B, 13C, and 13D are diagrams illustrating display of a decorative object in a home screen edit mode in an electronic device according to an embodiment.

As shown in FIGS. 13A and 13B, according to an embodiment, while displaying a plurality of objects including a decorative object 1303 with no touch interaction in a plurality of second cells of a second grid mode, an electronic device 201 (e.g., the electronic device 101 in FIG. 1 and/or the electronic device 201 in FIG. 2) may move the decorative object 1303 to a location selected by a user and display the decorative object 1303.

As shown in FIGS. 13C and 13D, according to an embodiment, the electronic device 201 may adjust and display the size of the decorative object 1303 to a size supported in the second grid mode, based on a size adjustment gesture performed by the user's input.

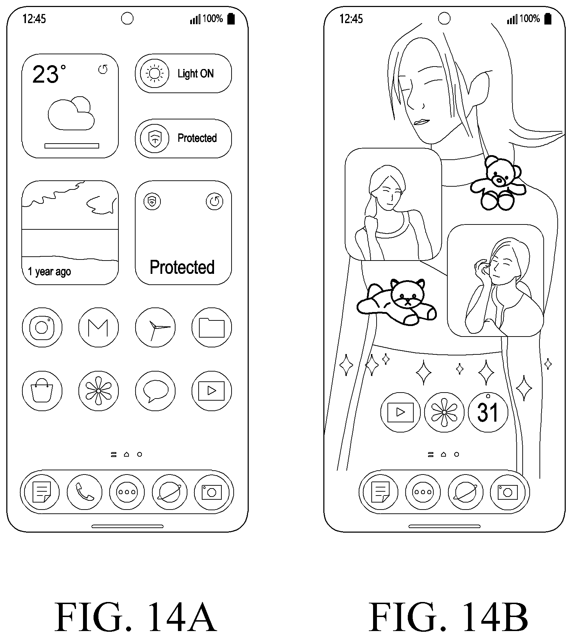

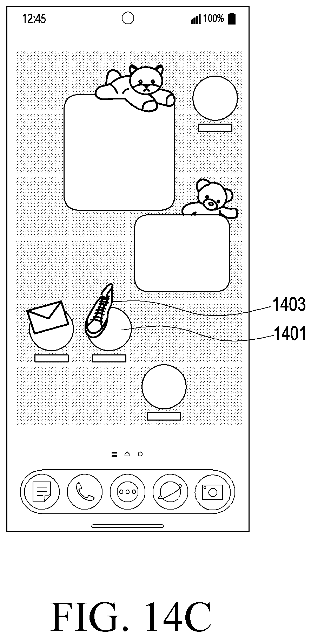

FIGS. 14A, 14B, and 14C are diagrams illustrating display of a decorative object in a home screen edit mode in an electronic device according to an embodiment.

FIG. 14A illustrates a home screen after a plurality of objects, each having a size supported in a first grid mode among home screen edit modes, have been neatly arranged in the first grid mode.

FIG. 14B illustrates a home screen after more freely arranging a plurality of objects, each having a size supported in a second grid mode among the home screen edit modes, in the second grid mode, compared to the first grid mode, has been completed.

FIG. 14C illustrates after more freely arranging a plurality of objects, each having a size supported in a second grid mode among the home screen edit modes, in the second grid mode, compared to the first grid mode, has been completed. On the home screen, a decorative object 1403 having no touch interaction may be disposed to overlap a first object 1401 having a touch interaction, and thus an image of the first object 1401 may be displayed as an image of the decorative object 1403

According to an embodiment, an electronic device (e.g., the electronic device 101 in FIG. 1 and/or the electronic device 301 in FIG. 2) may include a display (e.g., the display 160 in FIG. 1 and/or the display 260 in FIG. 2), at least one processor (e.g., the processor 120 in FIG. 1 and/or the processor 220 in FIG. 2), and memory (e.g., the memory 130 in FIG. 1 and/or the memory 230 in FIG. 2) configured to store instructions, wherein the instructions, when executed by the at least one processor, may cause the electronic device to, when entering a first grid mode among a plurality of home screen edit modes, display a plurality of first cells on the display, each of the first cells having a first size, display a first object in a first area including a first number of first cells among the plurality of first cells, and control the first object to be moved in units of the first cells. According to an embodiment, the instructions, when executed by the at least one processor, may cause the electronic device to, when entering a second grid mode among the plurality of home screen edit modes, configure a plurality of second cells, each of the second cells having a second size different from the first size, display the first object in a second area including a second number of second cells among the plurality of second cells, and control the first object to be moved in units of the second cells. According to an embodiment, the first size may be larger than the second size.

According to an embodiment, the plurality of first cells may have a rectangular shape and be arranged in rows and columns. According to an embodiment, the plurality of second cells may have a rectangular shape and may be arranged in rows and columns. According to an embodiment, the second number is the first number multiplied by a power of a specified number.

According to an embodiment, when the number of the plurality of first cells in the first grid mode is W × L, the number of the plurality of second cells in the second grid mode is (W × N) × (L × N), and the minimum movable distance of the first object in the second grid mode is 1/N of the minimum movable distance of the first object in the first grid mode, where W is the number of cells along the horizontal axis, L is the number of cells along the vertical axis, and N is an integer.

According to an embodiment, the instructions, when executed by the at least one processor, may cause the electronic device to identify a change in a size of the first object in the second grid mode. According to an embodiment, the instructions, when executed by the at least one processor, may cause the electronic device to, when a change in the size of the first object is less than or equal to a threshold value, display a layout of the first object before the size change at the center of the first object having a changed size, and the layout of the first object may indicate the type of the first object. According to an embodiment, the instructions, when executed by the at least one processor, may cause the electronic device to display, when a change in the size of the first object is greater than or equal to the threshold value, the layout of the first object, changed to correspond to the change in size of the first object, at the center of the first object having a changed size.

According to an embodiment, the instructions, when executed by the at least one processor, may cause the electronic device to, when switching from the first grid mode to the second grid mode, identify whether previous usage history information of the second grid mode exists. According to an embodiment, the instructions, when executed by the at least one processor, may cause the electronic device to, when existence of the previous usage history information of the second grid mode is identified, display a plurality of objects, based on object information last stored in the previous second grid mode. According to an embodiment, the instructions, when executed by the at least one processor, may cause the electronic device to, when non-existence of the previous usage history information of the second grid mode is identified, display a plurality of objects of the first grid mode in the second grid mode, based on object information last stored in the previous first grid mode.

According to an embodiment, the instructions, when executed by the at least one processor, may cause the electronic device to, when switching from the second grid mode to the first grid mode is identified, identify whether previous usage history information of the first grid mode exists. According to an embodiment, the instructions, when executed by the at least one processor, may cause the electronic device to, when existence of the previous usage history information of the first grid mode is identified, display a plurality of objects based on object information last stored in the previous first grid mode. According to an embodiment, the instructions, when executed by the at least one processor, may cause the electronic device to, when non-existence of the previous usage history information of the first grid mode is identified, arrange and display a plurality of objects of the second grid mode in the first grid mode, based on object information last stored in the second grid mode.

According to an embodiment, the instructions, when executed by the at least one processor, may cause the electronic device to, when existence of an object having a size not supported in the first grid mode is identified based on the object information last stored in the second grid mode, change the size of the object having the size not supported in the first grid mode to a size of an object having a size closest to the size of the object having the size not supported in the first grid mode among a plurality of objects having sizes supported in the first grid mode. According to an embodiment, the instructions, when executed by the at least one processor, may cause the electronic device to, when an object is displayed before a size change in the first grid mode, identify a cell that occupies the largest portion of the object. According to an embodiment, the instructions, when executed by the at least one processor, may cause the electronic device to display the object having the changed size, based on the cell.

According to an embodiment, the instructions, when executed by the at least one processor, may cause the electronic device to identify existence of a decorative object, based on the object information last stored in the previous second grid mode, and hide the decorative object.

According to an embodiment, the instructions, when executed by the at least one processor, may cause the electronic device to, when movement of the first object is identified while displaying the first object in the plurality of second cells of the second grid mode, display a guide line for arrangement of the first object while the first object is being moved.

According to an embodiment, the instructions, when executed by the at least one processor, may cause the electronic device to, when movement of the first object is identified in the second a plurality of cells of the second grid mode, the movement direction of the first object is identified as a horizontal direction, and a vertical alignment between the first object and a second object displayed in a location closest to the first object among a plurality of objects displayed in the plurality of second cells is identified while the first object is moving in the horizontal direction, display a guide line capable of indicating the vertical alignment between the first object and the second object. According to an embodiment, the instructions, when executed by the at least one processor, may cause the electronic device to, when the movement direction of the first object is identified as vertical movement and a horizontal alignment between the first object and a third object displayed in a location closest to the first object among the plurality of objects displayed in the plurality of second cells is identified while the first object is moving in the vertical direction, display a guide line capable of indicating the horizontal alignment between the first object and the third object.

According to an embodiment, the instructions, when executed by the at least one processor, may cause the electronic device to display a decorative object having no touch interaction, selected by a user's input while displaying the first object in the second grid mode, to overlap the first object.

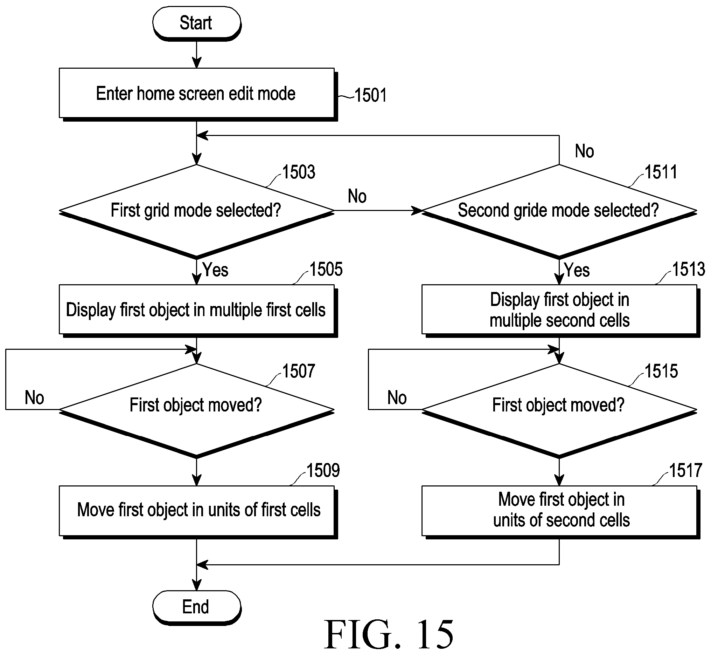

FIG. 15 is a flowchart illustrating operations for providing a grid mode for editing a home screen in an electronic device according to an embodiment. The operations for providing a grid mode for editing the home screen may include operations 1501 to 1517. In the following embodiments, the operations may be performed sequentially, but are not necessarily performed sequentially. For example, the order of the operations may be changed, and at least two operations may be performed in parallel, or another operation may be added.

In operation 1501, an electronic device (e.g., the electronic device 101 in FIG. 1 and/or the electronic device 201 in FIG. 2) may enter a home screen edit mode.

According to an embodiment, when entering the home screen edit mode based on a user's selection, the electronic device may display a grid mode selection screen for selecting a first grid mode or a second grid mode on a display (e.g., the display 260 in FIG. 2) of the electronic device.

In operation 1503, when selection of the first grid mode is identified, the electronic device (e.g., the electronic device 101 in FIG. 1 and/or the electronic device 201 in FIG. 2) may display a first object in a plurality of first cells in operation 1505.

According to an embodiment, when the selection of the first grid mode is identified in the grid mode selection screen, the electronic device may display the plurality of first cells (e.g., 24 cells) including cells (e.g., 4 cells) along a first horizontal axis and cells (e.g., 6 cells) along a first vertical axis on the display (e.g., the display 260 in FIG. 2) of the electronic device.

According to an embodiment, when it is identified that the first object is selected by the user's input from among a first plurality of objects that can be provided in the first grid mode, the electronic device may display the selected first object as a first object having a size that is set to a default size.

According to an embodiment, when displaying the first object in a location selected by the user's input in the plurality of first cells, the electronic device may display the first object in at least one cell, among the plurality of first cells, corresponding to the size of the first object.

According to an embodiment, when displaying the first object in the location selected by the user's input in the plurality of first cells, the electronic device may, if it is identified that the first object is selected by the user's input from among the first plurality of objects supported in the first grid mode, display the first object in a first area including a first number of the first cells among the plurality of first cells.

In operation 1507, when movement of the first object is identified, the electronic device (e.g., the electronic device 101 in FIG. 1 and/or the electronic device 201 in FIG. 2) may move the first object in units of first cells in operation 1509.

According to an embodiment, when the movement of the first object is identified based on the user's selection, the electronic device may move the first object by using one of in the plurality of first cells, having a width and a height of a first size, as a minimum unit.

In operation 1511, when selection of the second grid mode is identified, the electronic device (e.g., the electronic device 101 in FIG. 1 and/or the electronic device 201 in FIG. 2) may display, in operation 1513, the first object in a plurality of second cells.

According to an embodiment, when the selection of the second grid mode is identified in the grid mode selection screen, the electronic device may configure a plurality of second cells (e.g., 1,500 cells) including cells (e.g., 100 cells) along a second horizontal axis, obtained by multiplying the number (e.g., 4 cells) of cells along the first horizontal axis by a specified multiple (e.g., 25), and cells (e.g., 150 cells) along a second vertical axis, obtained by multiplying the number (e.g., 6 cells) of cells along the first vertical axis by a specified multiple (e.g., 25). According to an embodiment, the electronic device may display, on the display 260, a plurality of second cells (e.g., 1,500 cells) obtained by multiplying the number (e.g., 24 cells) of the plurality of first cells by a power of the specified multiple (e.g., 25).

According to an embodiment, when it is identified that a first object is selected by the user's input from among a second plurality of objects available in the second grid mode, a second plurality of objects having an intermediate size between the second plurality of objects, and decorative objects having no touch interactions, the electronic device may change the size (e.g., 2x1) of the first object, which is set to the default size, to a size (e.g., 50x25) obtained by multiplying the default size by a power of the specified multiple (e.g., 25), and may display the first object having the changed size.

According to an embodiment, when displaying the first object in the location selected by the user's input in the plurality of second cells, the electronic device may display the first object in a plurality of cells, corresponding to the changed size of the first object, among the plurality of second cells.

According to an embodiment, when it is identified that the first object is selected by the user's input from among the plurality of second cells, the electronic device may display the first object in a second area including a second number of second cells among the plurality of second cells.

According to an embodiment, the second number may be a number obtained by multiplying the first number for displaying the first object in the first grid mode by a power of a specified multiple.

In operation 1515, when movement of the first object is identified, the electronic device (e.g., the electronic device 101 in FIG. 1 and/or the electronic device 201 in FIG. 2) may move the first object in units of second cells in operation 1517.

According to an embodiment, when the movement of the first object is identified based on the user's selection, the electronic device may move the first object by using one of the plurality of second cells, having a width and a height of a second size larger than the first size of the width and height of one cell in the first grid mode, as a minimum unit.

According to an embodiment, when each of the plurality of first cells of the first grid mode has a first size of 1×1, each of the plurality of second cells of the second grid mode may have a second size of 1/n × 1/n. Here, n may indicate a specified multiple when displaying a plurality of second cells in the second grid mode including cells along a second horizontal axis and cells along a second vertical axis, which are obtained by multiplying each of the number of cells along the first horizontal axis and the number of cells along the first vertical axis among the plurality of first cells by the specified multiple.

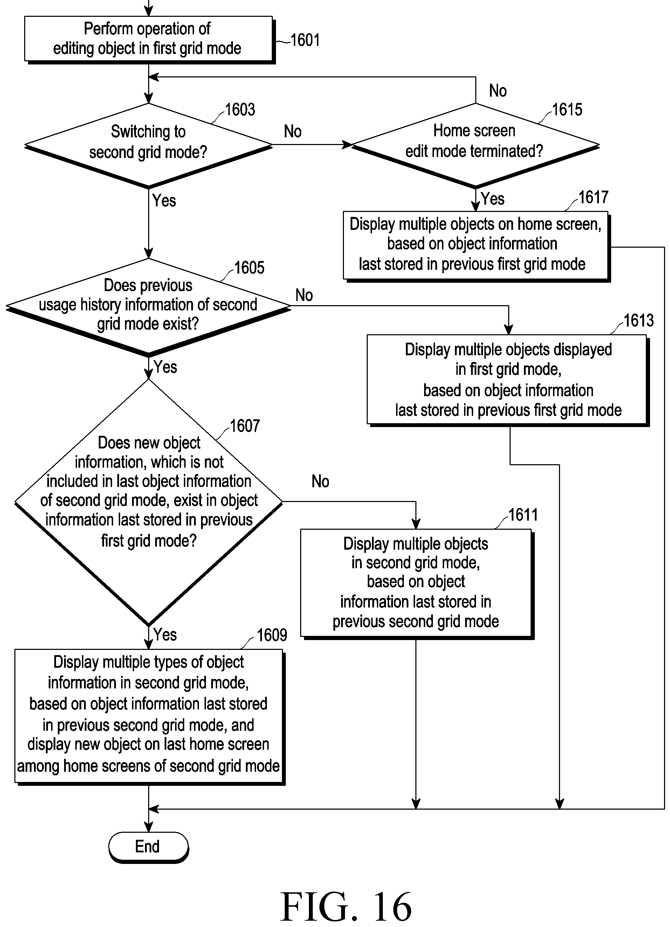

FIG. 16 is a flowchart illustrating operations for providing a grid mode for editing a home screen in an electronic device according to an embodiment. The operations for providing the grid mode for editing the home screen may include operations 1601 to 1617. In the following embodiments, the operations may be performed sequentially, but are not necessarily performed sequentially. For example, the order of the operations may be changed, and at least two operations may be performed in parallel, or another operation may be added.

In operation 1601, an electronic device (e.g., the electronic device 101 in FIG. 1 and/or the electronic device 201 in FIG. 2) may perform an operation of editing an object in a first grid mode.

According to an embodiment, the electronic device may arrange and display, in a plurality of first cells of the first grid mode, a plurality of objects selected by a user's input from among a first plurality of objects supported in the first grid mode.

In operation 1603, when switching to a second grid mode is identified, the electronic device (e.g., the electronic device 101 in FIG. 1 and/or the electronic device 201 in FIG. 2) may identify, in operation 1605, whether there is previous usage history information of the second grid mode.

According to an embodiment, when switching from the first grid mode to the second grid mode is identified, the electronic device may store, in memory (e.g., the memory 230 in FIG. 2) of the electronic device, object information including the type, size, and location of each of the plurality of objects arranged in the first grid mode, as object information last stored in the previous first grid mode.

According to an embodiment, when the switching to the second grid mode is identified, the electronic device may identify the previous usage history information of the second grid mode, which is used to identify whether object information stored last in the previous second grid mode exists.

In operation 1605, when existence of the previous usage history information of the second grid mode is identified, the electronic device may identify, in operation 1607, whether new object information, which is not included in the object information stored last in the previous second grid mode, exists in the object information stored last in the previous first grid mode.

According to an embodiment, when the existence of the previous usage history information of the second grid mode is identified, the electronic device may identify the object information last stored in the previous second grid mode from the memory (e.g., the memory 230 in FIG. 2) of the electronic device.

According to an embodiment, when existence of the previous usage history information of the second grid mode is identified, the electronic device may identify the object information last stored in the previous first grid mode from the memory (e.g., the memory 230 in FIG. 2) of the electronic device.

According to an embodiment, when existence of the previous usage history information of the second grid mode is identified, the electronic device may compare the object information last stored in the previous first grid mode and the object information last stored in the previous second grid mode.

According to an embodiment, based on the result of comparing the object information last stored in the previous first grid mode with the object information last stored in the previous second grid mode, the electronic device may identify whether new object information that is not included in the object information last stored in the previous second grid mode exists in the object information last stored in the previous first grid mode.

In operation 1607, when it is identified that the new object information, which is not included in the object information last stored in the previous second grid mode, exists in the object information last stored in the previous first grid mode, the electronic device may, in operation 1609, display multiple types of object information in the second grid mode, based on the object information last stored in the previous second grid mode, and display a new object on the last home screen among home screens of the second grid mode.

According to an embodiment, the electronic device may display a plurality of objects in a plurality of second cells, based on the object information last stored in the previous second grid mode.

According to an embodiment, the electronic device may display the new object in the last home screen of the home screens in the second grid mode while arranging and displaying a plurality of objects in the plurality of second cells, based on object information last stored in the previous second grid mode.

According to an embodiment, the electronic device may display the new object at a location, at which the new object does not overlap other objects, on the last home screen among home screens each displayed as a plurality of second cells in the second grid mode.

According to an embodiment, when providing a single home screen in the second grid mode, the electronic device may add one home screen, and display the new object in the added home screen.

According to an embodiment, when an area in which the new object can be added does not exist in the last home screen among the home screens displayed as a plurality of second cells in the second grid mode, the electronic device may add one home screen, and display the new object on the added home screen.

In operation 1607, when it is not identified that the new object information, which is not included in the object information last stored in the previous second grid mode, exists in the object information last stored in the previous first grid mode, the electronic device may display, in operation 1611, a plurality of objects in the second grid mode, based on the object information last stored in the previous second grid mode.

According to an embodiment, the electronic device may arrange and display a plurality of objects in a plurality of second cells, based on the object information last stored in the previous second grid mode.

In operation 1605, when the existence of the previous usage history information of the second grid mode is not identified, the electronic device may display, in operation 1613, the plurality of objects displayed in the first grid mode, in the second grid mode, based on the object information last stored in the previous first grid mode.

According to an embodiment, when the existence of the previous usage history information of the second grid mode is not identified, the electronic device may display, based on the object information last stored in the previous first grid mode, the plurality of objects that were arranged in the previous first grid mode on a plurality of second cells of the second grid mode according to the user's selection.

According to an embodiment, when the previous usage history information of the second grid mode is not identified, the processor 220 may provide a new second grid mode, in which no objects are arranged, based on a user's selection.

In operation 1615, when termination of the home screen edit mode is identified, the home screen edit mode may be terminated in operation 1617, the electronic device (e.g., the electronic device 101 in FIG. 1 and/or the electronic device 201 in FIG. 2) may, in operation 1617, terminate the home screen edit mode and display a plurality of objects on the home screen, based on the object information last stored in the previous first grid mode.

According to an embodiment, when termination of the home screen edit mode is identified, the electronic device may store, in the memory (e.g., the memory 230 in FIG. 2) of the electronic device, object information including the type, size, and location of each of the plurality of objects arranged in the first grid mode, as the object information last stored in the previous first grid mode, and may terminate the home screen edit mode.

According to an embodiment, after the termination of the home screen edit mode, the electronic device may display a plurality of objects on the home screen, based on the object information last stored in the previous first grid mode.

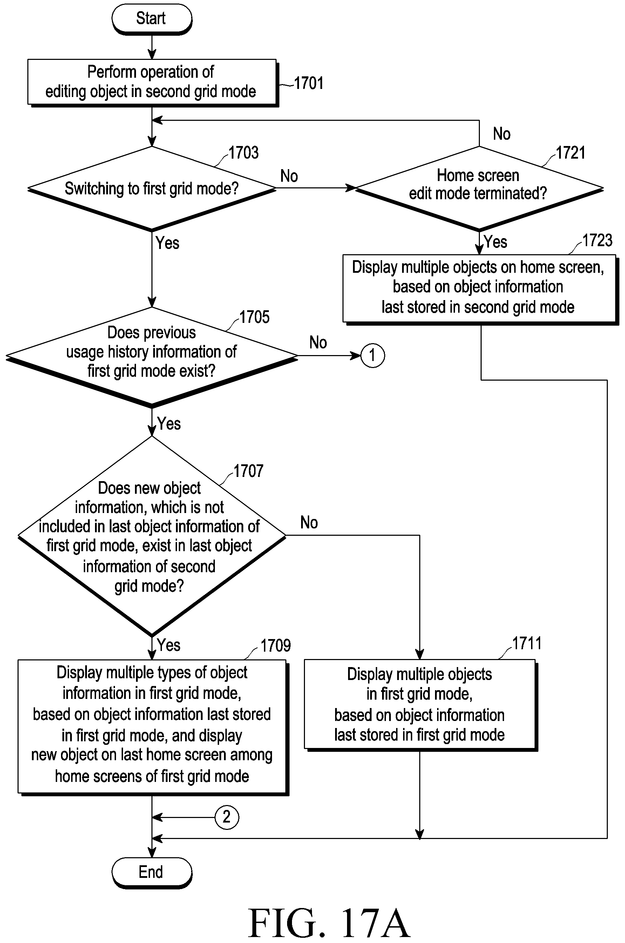

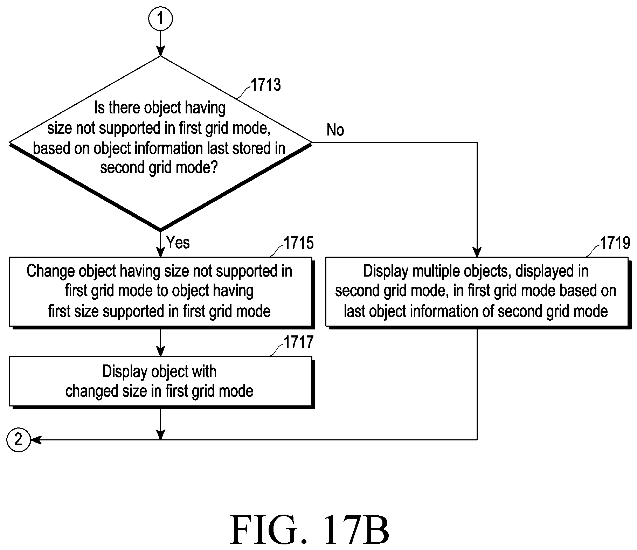

FIGS. 17A and 17B are flowcharts illustrating operations for providing a grid mode for editing a home screen in an electronic device according to an embodiment. The operations for providing the grid mode for editing the home screen may include operations 1701 to 1723. In the following embodiments, the operations may be performed sequentially, but are not necessarily performed sequentially. For example, the order of the operations may be changed, and at least two operations may be performed in parallel, or another operation may be added.

In operation 1701, an electronic device (e.g., the electronic device 101 in FIG. 1 and/or the electronic device 201 in FIG. 2) may perform an object for editing operation in a second grid mode.

According to an embodiment, the electronic device may arrange and display, in a plurality of second cells of the second grid mode, a plurality of objects selected by a user's input from among a second plurality of objects supported in the second grid mode, a third plurality of objects having an intermediate size between the second plurality of objects, and decorative objects having no touch interaction.

In operation 1703, when switching to a first grid mode is identified, the electronic device (e.g., the electronic device 101 in FIG. 1 and/or the electronic device 201 in FIG. 2) may identify, in operation 1705, whether previous usage history information of the first grid mode exists.

According to an embodiment, when switching from the second grid mode to the first grid mode is identified, the electronic device may store, in memory (e.g., the memory 230 in FIG. 2) of the electronic device, object information including the type, size, and location of each of the plurality of objects arranged in the second grid mode, as object information last stored in the previous second grid mode.

According to an embodiment, when switching to the first grid mode is identified, the electronic device may identify the previous usage history information of first grid mode, which can be used to identify whether object information last stored in the previous first grid mode exists.

In operation 1705, when existence of the previous usage history information of the first grid mode is identified, the electronic device may, in operation 1707, identify whether new object information, which is not included in the object information last stored in the previous first grid mode, exists in the object information last stored in the previous second grid mode.

According to an embodiment, when existence of the previous usage history information of the first grid mode is identified, the electronic device may identify the object information last stored in the previous first grid mode from the memory (e.g., the memory 230 in FIG. 2) of the electronic device.

According to an embodiment, when existence of the previous usage history information of the first grid mode is identified, the electronic device may identify the object information last stored in the previous second grid mode from the memory (e.g., the memory 230 in FIG. 2) of the electronic device.

According to an embodiment, when existence of the previous usage history information of the first grid mode is identified, the electronic device may compare the object information last stored in the previous second grid mode with the object information last stored in the previous first grid mode.

According to an embodiment, based on the result of comparing the object information last stored in the previous second grid mode with the object information last stored in the previous first grid mode, the electronic device may identify whether the new object information, which is not included in the object information last stored in the previous first grid mode, exists in the object information last stored in the previous second grid mode.

In operation 1707, when it is identified that the new object information, which is not included in the object information last stored in the previous first grid mode, exists in the object information last stored in the previous second grid mode, the electronic device may, in operation 1709, display multiple types of object information in a plurality of first cells of the first grid mode, based on the object information last stored in the previous first grid mode, and display a new object on a last home screen among a plurality of home screens of the first grid mode on which the plurality of first cells are displayed.

According to an embodiment, the electronic device may arrange and display a plurality of objects in the plurality of first cells, based on the object information last stored in the previous first grid mode.

According to an embodiment, while arranging and displaying the plurality of objects in the plurality of first cells based on object information last stored in the previous first grid mode, the electronic device may additionally display a new object on the last home screen among the plurality of home screens of the first grid mode.

According to an embodiment, the electronic device may display the new object at a location, in which the new object does not overlap other objects, on the last home screen among the plurality of home screens each displayed as a plurality of first cells in the first grid mode.

According to an embodiment, when providing a single home screen in the first grid mode, the electronic device may add one home screen and display the new object on the added home screen.

According to an embodiment, when an area in which the new object can be added does not exist in the last home screen displayed among the plurality of home screens each displayed as a plurality of first cells in the first grid mode, the electronic device may add one home screen, and display the new object on the added home screen.

In operation 1707, when it is not identified that the new object information, which is not included in the object information last stored in the previous first grid mode, exists in the object information last stored in the previous second grid mode, the electronic device may display, in operation 1711, a plurality of objects in the first grid mode, based on the object information last stored in the previous first grid mode.

According to an embodiment, the electronic device may arrange and display a plurality of objects in a plurality of first cells, based on the object information last stored in the previous first grid mode.

In operation 1705, when existence of the previous usage history information of the first grid mode is not identified, the electronic device may, in operation 1713, identify whether there is an object having a size not supported in the first grid mode, based on the object information last stored in the second grid.

According to an embodiment, the object having a size not supported in the first grid mode may include a second plurality of objects having an intermediate size between the second plurality of objects supported only in the second grid mode.

In operation 1713, when the existence of the object having a size not supported in the first grid mode is identified, the electronic device may change, in operation 1715, the object having the size not supported in the first grid mode to an object having a size supported in the first grid mode.

According to an embodiment, the electronic device may change and display the object having a size not supported in the first grid mode to an object, having a size closest to the object having a size not supported in the first grid mode, among the plurality of objects supported in the first grid mode.

According to an embodiment, when the object having a size not supported in the first grid mode is an object having an intermediate size between object A and object B among the first plurality of objects, the electronic device may change the object to the size of object B if the object is 70% or more of the size of object B, and may change the object to the size of object A if the object is 70% or less of the size of object B.

In operation 1717, according to an embodiment, the electronic device (e.g., the electronic device 101 in FIG. 1 and/or the electronic device 201 in FIG. 2) may display an object having the changed size in the first grid mode.

According to an embodiment, when the object having a size not supported in the first grid mode is disposed in the first grid mode before the size change, the electronic device may identify a cell that occupies the largest portion of the object, and display an object changed to a size supported in the first grid mode, based on the cell.

According to an embodiment, when existence of a decorative object not supported in the first grid mode is identified based on the object information last stored in the second grid, the electronic device may perform hiding processing of the decorative object in the first grid mode so as not to display the decorative object.

In operation 1713, when the existence of the object having a size not supported in the first grid mode is not identified, the electronic device may, in operation 1719, display the plurality of objects, which were displayed in the second grid mode, in the first grid mode, based on the object information last stored in the previous second grid mode.

According to an embodiment, when existence of the previous usage history information of the first grid mode is not identified, the electronic device may, based on the object information last stored in the previous second grid mode, arrange and display the plurality of objects, which were arranged in the previous second grid mode, in the plurality of first cells of the first grid mode according to the user's selection.

According to an embodiment, when existence of the previous usage history information of the first grid mode is not identified, the processor 220 may provide a new first grid mode, in which no objects are arranged, based on the user's selection.

In operation 1721, when termination of the home screen edit mode is identified, the electronic device (e.g., the electronic device 101 in FIG. 1 and/or the electronic device 201 in FIG. 2) may, in operation 1723, terminate the home screen edit mode and display a plurality of objects on the home screen, based on the object information last stored in the previous second grid mode.

According to an embodiment, when the termination of the home screen edit mode is identified, the electronic device may store, in the memory (e.g., the memory 230 in FIG. 2) of the electronic device, object information including the type and location of each of the plurality of objects arranged in the second grid mode as the object information last stored in the previous first grid mode, and may terminate the home screen edit mode.

According to an embodiment, when the termination of the home screen edit mode is identified, the electronic device may display a plurality of objects on the home screen, based on the object information last stored in the previous second grid mode.

According to an embodiment, a method for editing a home screen in an electronic device (e.g., the electronic device 101 in FIG. 1 and/or the electronic device 201 in FIG. 2) may include an operation of, when entering a first grid mode among a plurality of home screen edit modes, displaying a plurality of first cells on a display, each of the first cells having a first size, displaying a first object in a first area including a first number of first cells among the plurality of first cells, and controlling the first object to be moved in units of the first cells. According to an embodiment, the method may include an operation of, when entering a second grid mode among the plurality of home screen edit modes, configuring a plurality of second cells, each of the second cells having a second size different from the first size, displaying the first object in a second area including a second number of second cells among the plurality of second cells, and controlling the first object to be moved in units of the second cells. According to an embodiment, in the method , the first size may be larger than the second size.

According to an embodiment, in the method, the plurality of first cells may have a rectangular shape and may be arranged in rows and columns. According to an embodiment, in the method, the plurality of second cells may have a rectangular shape and may be arranged in rows and columns. In the method according to an embodiment, the second number may be the first number multiplied by a power of a specified number.

According to an embodiment, in the method, when the number of the plurality of first cells in the first grid mode is W × L, the number of the plurality of second cells in the second grid mode is (W × N) × (L × N), and the minimum movable distance of the first object in the second grid mode is 1/N of the minimum movable distance of the first object in the first grid mode, where W is the number of cells along the horizontal axis, L is the number of cells along the vertical axis, and N is an integer.

According to an embodiment, the method may include an operation of identifying a change in the size of the first object in the second grid mode. According to an embodiment , the method may include an operation of displaying, when the change in the size of the first object is equal to or less than a threshold value, a layout of the first object before the size change at the center of the first object having the changed size, the layout of the first object indicating the type of the first object. According to an embodiment, the method may further include an operation of, when the change in the size of the first object is equal to or greater than the threshold value, displaying the layout of the first object, changed to correspond to the change in the size of the first object, at the center of the first object having the changed size.

According to an embodiment, the method may include an operation of, when switching from the first grid mode to a second grid mode, identifying whether previous usage history information of the second grid mode exists. According to an embodiment, the method may include an operation of, when existence of the previous usage history information of the second grid mode is identified, displaying a plurality of objects, based on object information last stored in the previous second grid mode. According to an embodiment , the method may further include an operation of, when non-existence of the previous usage history information of the second grid mode is identified, displaying a plurality of objects of the first grid mode in the second grid mode, based on object information last stored in the previous first grid mode.

According to an embodiment, the method may include an operation, when switching from the second grid mode to the first grid mode is identified, identifying whether previous usage history information of the first grid mode exists.

According to an embodiment, the method may include an operation of, when existence of the previous usage history information of the first grid mode is identified, displaying a plurality of objects based on the object information last stored in the previous first grid mode. According to an embodiment , the method may further include an operation of, when non-existence of the previous usage history information of the first grid mode is identified, arranging and displaying a plurality of objects of the second grid mode in the first grid mode, based on the object information last stored in the second grid mode.

According to an embodiment, the method may include an operation of, when existence of an object having a size not supported in the first grid mode is identified based on the object information last stored in the second grid mode, changing the size of the object having the size not supported in the first grid mode to the size of an object, having a size closest to the size of the object having the size not supported in the first grid mode, among a plurality of objects having sizes supported in the first grid mode. According to an embodiment, tThe method may include an operation of, when an object is displayed before the size change in the first grid mode, identifying a cell that occupies the largest portion of the object. According to an embodiment, the method may further include an operation of displaying the object having the changed size, based on the cell.

According to an embodiment, the method may further include an operation of identifying existence of a decorative object, based on the object information last stored in the previous second grid mode, and hiding the decorative object.

According to an embodiment, the method may further include an operation of, when movement of the first object is identified while displaying the first object in the plurality of second cells of the second grid mode, displaying a guide line for arranging the first object.

According to an embodiment, the method may include an operation of, when movement of the first object is identified in the plurality of second cells of the second grid mode, a movement direction of the first object is identified as a horizontal direction, and a vertical alignment between the first object and a second object, displayed in a location closest to the first object among the plurality of objects displayed in the plurality of second cells, is identified while the first object is moving in the horizontal direction, displaying a guide line capable of indicating the vertical alignment between the first object and the second object. According to an embodiment , the method may further include an operation of, when the movement direction of the first object is identified as vertical movement, and a horizontal alignment between the first object and a third object displayed in a location closest to the first object among the plurality of objects displayed in the plurality of second cells while the first object is moving in the vertical direction, displaying a guide line capable of indicating the horizontal alignment between the first object and the third object.

According to an embodiment, the method may further include an operation of displaying, while displaying the first object in the second grid mode, a decorative object having no touch interaction selected by a user's input to overlap the first object.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101 or 301). For example, a processor (e.g., the processor 320) of the machine (e.g., the electronic device 301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device (101 of Fig 1; 201 of Fig 2), comprising:
a display (160 of Fig1; 260 of Fig 2);
at least one processor (120 of Fig1; 220 of Fig 2); and
memory (130 of Fig1; 230 of Fig 2) storing instructions that, when executed by the at least one processor, cause the electronic device to:
display, through the display, a plurality of first cells when entering a first grid mode among a plurality of editing modes of a home screen, each of the first cells having a first size, display a first object in a first area including a first number of first cells among the plurality of first cells, and control to move the first object in units of the first cells, and
set a plurality of second cells when entering a second grid mode among the plurality of editing modes of the home screen, each of the second cells having a second size different from the first size, display the first object in a second area including a second number of second cells among the plurality of second cells, and control to move the first object in units of the second cells,
wherein the first size is larger than the second size.

2. The electronic device of claim 1,
wherein the plurality of first cells have a rectangular shape and are disposed in rows and columns,
the plurality of second cell have a rectangular shape and are disposed in rows and columns, and
wherein the second number is the first number to the power of a specified number.

3. The electronic device of claim 1 or 2,
if a number of the plurality of first cells in the first grid mode is W x L, a number of the plurality of second cells in the second grid mode is (W x N) x (L x N), and
a minimum moveable distance of the first object in the second grid mode is 1/N of a minimum movable distance of the first object in the first grid mode,
wherein, W is a number of cells on a horizontal axis, L is a number of cells on a vertical axis, and N is an integer.

4. The electronic device of any one of claims 1 to 3, wherein the instructions, when executed by the at least one processor, cause the electronic device to:
in the second grid mode, identify a change in a size of the first object,
if a change in a size of the first object is less than or equal a threshold value, display a layout of the first object before the size change at a center of the first object having the changed size, wherein the layout of the first object indicates a type of the first object, and
if a change in a size of the first object is greater than or equal to the threshold value, display a layout of the first object changed corresponding to the change in the size of the first object at a center of the first object having the changed size.

5. The electronic device of any one of claims 1 to 4, wherein the instructions, when executed by the at least one processor, cause the electronic device to:
identify whether previous use history information for the second grid mode exists, when switching from the first grid mode to the second grid mode,
if the existence of previous use history information for the second grid mode is identified, display a plurality of objects based on information on an object stored last in a previous second grid mode, and
if the existence of previous use history information for the second grid mode is not identified, display a plurality of objects of the first grid mode in the second grid mode based on information on an object stored last in a previous first grid mode.

6. The electronic device of any one of claims 1 to 5, wherein the instructions, when executed by the at least one processor, cause the electronic device to:
identify whether previous use history information for the first grid mode exists, when switching from the second grid mode to the first grid mode,
if the existence of previous use history information for the first grid mode is identified, display a plurality of objects based on information on an object stored last in a previous first grid mode, and
if the existence of previous use history information for the first grid mode is not identified, dispose and display a plurality of objects of the second grid mode in the first grid mode based on information on an object stored last in a previous second grid mode.

7. The electronic device of any one of claims 1 to 6, wherein the instructions, when executed by the at least one processor, cause the electronic device to:
if an existence of an object having a size not supported in the first grid mode is identified based on information on an object stored last in the second grid mode, change a size of the object having a size not supported in the first grid mode to a size of an object having a size closest to the size of the object having a size not supported in the first grid mode among a plurality of objects having a size supported in the first grid mode,
when an object is displayed before the size change in the first grid mode, identify a cell that occupies the largest part of the object, and
display the object having the changed size based on the cell.

8. The electronic device of any one of claims 1 to 7, wherein the instructions, when executed by the at least one processor, cause the electronic device to:identify existence of an object for decoration based on information on an object stored last in a previous second grid mode, perform a hide process on the decorating object.

9. The electronic device of any one of claims 1 to 6, wherein the instructions, when executed by the at least one processor, cause the electronic device to:
if a movement of the first object is identified while displaying the first object in the plurality of second cells of the second grid mode, display a guideline for positioning the first object while the first object is being moved.

10. The electronic device of any one of claims 1 to 9, wherein the instructions, when executed by the at least one processor, cause the electronic device to:
identify a movement of the first object in the plurality of second cells of the second grid mode,
if a movement direction of the first object is identified as a horizontal direction, and while the first object moves in the horizontal direction, vertical alignment with a second object displayed at a position closest to the first object among the plurality of objects displayed in the plurality of second cells is identified, display a guideline capable of informing vertical alignment between the first object and the second object, and
if a movement direction of the first object is identified as a vertical direction, and while the first object moves in the vertical direction, horizontal alignment with a third object displayed at a position closest to the first object among the plurality of objects displayed in the second plurality of cells is identified, display a guideline capable of informing horizontal alignment between the first object and the third object.

11. The electronic device of any one of claims 1 to 10, wherein the instructions, when executed by the at least one processor, cause the electronic device to:
overlap and display an object for decoration without touch interaction selected by a user input on the first object while displaying the first object in the second grid mode.

12. A method for editing a home screen in an electronic device, the method comprising:
upon entering a first grid mode among a plurality of home screen edit modes, displaying a plurality of first cells on the display, each of the first cells having a first size, displaying a first object in a first area comprising a first number of first cells among the plurality of first cells, and controlling the first object to be moved in units of the first cells; and
upon entering a second grid mode among the plurality of home screen edit modes, configuring a plurality of second cells, each of the second cells having a second size different from the first size, displaying the first object in a second area comprising a second number of second cells among the plurality of second cells, and controlling the first object to be moved in units of the second cells,
wherein the first size is larger than the second size.

13. The method of claim 12, wherein the plurality of first cells have a rectangular shape and are arranged in rows and columns,
wherein the plurality of second cells have a rectangular shape and are arranged in rows and columns, and
wherein the second number is the first number multiplied by a power of a specified number.

14. The method of claim 12 or 13, wherein, in case that a number of the plurality of first cells in the first grid mode is W × L, a number of the plurality of second cells in the second grid mode is (W × N) × (L × N),
wherein a minimum movable distance of the first object in the second grid mode is 1/N of a minimum movable distance of the first object in the first grid mode, and
wherein W is a number of cells along a horizontal axis, L is a number of cells along a vertical axis, and N is an integer.

15. A non-volatile storage medium storing instructions that are configured to, when executed by an electronic device, cause the electronic device to perform at least one operation,
wherein the at least one operation comprises:
upon entering a first grid mode among a plurality of home screen edit modes, displaying a plurality of first cells on the display, each of the first cells having a first size;
displaying a first object in a first area comprising a first number of first cells among the plurality of first cells, and controlling the first object to be moved in units of the first cells;
upon entering a second grid mode among the plurality of home screen edit modes, configuring a plurality of second cells, each of which having a second size different from the first size; and
displaying the first object in a second area comprising a second number of second cells among the plurality of second cells, and controlling the first object to be moved in units of the second cells, and
wherein the first size is larger than the second size.
